**Europäisches Patentamt**

**European Patent Office**

**Office européen des brevets**

(19)

(11) **EP 1 347 611 A1**

(12) **EUROPEAN PATENT APPLICATION**

(43) Date of publication:
**24.09.2003 Bulletin 2003/39**

(51) Int Cl.$^7$: **H04L 27/233**, H04L 27/00

(21) Application number: **02425173.8**

(22) Date of filing: **20.03.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Siemens Information and Communication Networks S.p.A.**
**20126 Milano (IT)**

(72) Inventor: **Ventura, Alessandro**
**20158 Milano (IT)**

(74) Representative: **Giustini, Delio**
**Siemens Information and Communication Networks S.p.A.,**
**Palazzo Gorky**
**Via Monfalcone, 1**
**20092 Cinisello Balsamo (IT)**

(54) **Data aided frequency synchronisation**

(57) Some improvements to the conventional algorithms for data aided frequency synchronisation in cellular systems are introduced in a new method executable by the user equipments of various standards, i.e. 3GPP CDMA-TDMA, FDD mode at 3.84 Mcps, TDD mode at 3.84 Mcps, TDD mode at 1.28 Mcps; CWTS TD-SCDMA; GSM/DCS/GPRS. The method begins to obtain the suboptimal frequency errors $\Delta \tilde{f}_i$ using a well known formula which calculates the argument of the autocorrelation over a subset of the baseband samples of the detected training sequence. The errors $\Delta \tilde{f}_i$ are stored into a shift register $L$-position long and averaged to obtain an estimated frequency error $\Delta f_i$ used for recursively correcting the reference frequency of the local oscillator, as: $f_i = f_{i-1} + K\Delta f_i$ where $K$ ($0 \leq K \leq 1$) is a weighting factor. Contrarily to the simple averaged error of the prior art, a sign criterion is used by which the average is performed on the only terms having the most recurrent algebraic sign among the stored terms $\Delta \tilde{f}_i$. The content of the shift register is corrected after each non-null frequency correction by subtracting $K \cdot \Delta f_i$ to all the stored terms $\Delta \tilde{f}_i$. Besides the frequency is corrected upon the following optional conditions, each other independents: The number of terms $\Delta \tilde{f}_i$ having equal algebraic sign is greater than a constant $\alpha$ lower than $L$. The standard deviation $\sigma$ of the averaged terms $\Delta \tilde{f}_i$ is lower than $\beta \cdot \sigma_{old}$, being $\sigma_{old}$ the $\sigma$ of the last non-null frequency correction, and $\beta$ a constant $\geq 1$. After a minimum number $\gamma$ of iterations between two non-null frequency corrections are spent, being $\gamma$ a constant comprised between 1 and $L$. According to another variant the iterations of the recursive update are subdivided into an initial group with a higher $K$ value for achieving fast convergence and a subsequent group with a lower $K$ for achieving the required accuracy (fig. 13).

**STEP F3: Command cond = fourth average mode**

Fig.13

**EP 1 347 611 A1**

**Description**

**FIELD OF THE INVENTION**

The present invention is referred to the field of the frequency synchronization and more precisely to some improvements in data aided frequency synchronisation in cellular mobile equipments.

**BACKGROUND ART**

The precise frequency synchronisation is a basic procedure carried out by a mobile station in order to meet with severe specification requirements, e.g. 0.1 ppm. It allows the calibration of the local oscillator immediately after the initial cell search which takes place at switch on time. The initial cell search is a procedure for a certain extent depending on the characteristic of the involved PLMN (Public Land Mobile Network), but in any case it includes a frequency scan of the assigned band together with the detection of a synchronisation sequence, assigned on cell basis, for the purpose of detecting a target cell with which communicate. At the end of the initial cell search a frequency error as large as $\pm 10$ ppm is expected on the carrier frequency of the target cell, this is due to the inaccuracy of the commercial reference oscillators. This offset, if not promptly corrected, decreases the quality of the demodulated signal and increases the bit error probability. Data aided frequency synchronisation technique has been widely investigated in the past years and some interesting solutions for mobile telephony have been recently proposed.

A first data aided frequency synchronisation method is disclosed in the article of Y-Pin Eric Wang and Tony Ottosson, titled: *"Cell Search in W-CDMA",* published on IEEE Journal On Selected Areas In Communications, Vol. 18, No. 8, August 2000. The method estimates the frequency error by exploiting the knowledge of pilot symbols of a Perch channel, continuously transmitted in Wideband Code Division Multiple Access (W-CDMA) systems. The pilot symbols are initially detected with an frequency offset of $\pm 20$ kHz. The offset is eliminated estimating the frequency $f_e$ which maximizes the decision statistic **z** within the frequency uncertainty region bounded by the largest possible frequency error. A sub-optimal metric **z'** is derived by despreading the pilot symbols, removing the modulation, and calculating the 64-point FFT (Fast Fourier Transform) of the resulting symbols. The frequency $f_e$ is obtained accumulating the decision statistics **z'** over M slots and performing a quadratic interpolation.

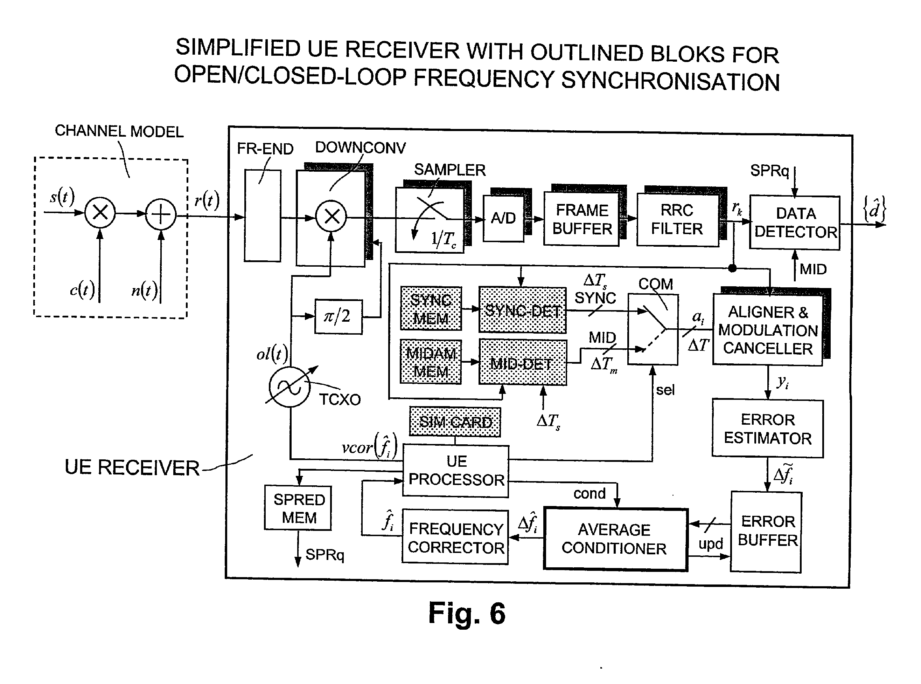

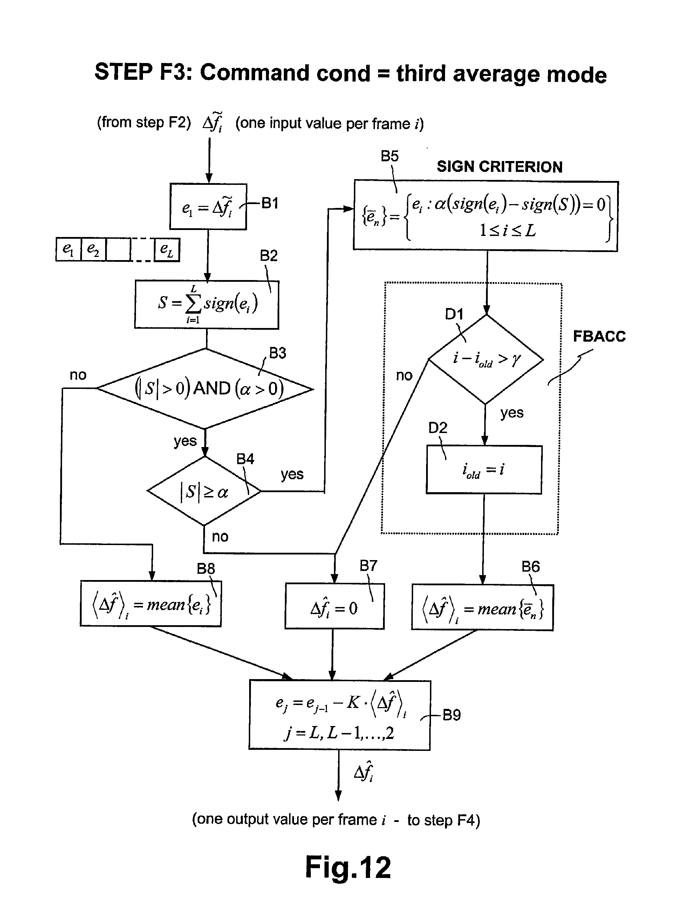

A second data aided frequency synchronisation method, not based on the explicit calculation of the FFT, is disclosed in the article of Marco Luise and Ruggero Reggiannini, titled: *"Carrier Frequency Recovery in All-Digital Modems for Burst-Mode Transmissions",* published on IEEE Transactions On Communications, Vol. 43 No. 2/3/4 February 1995. This article undoubtedly constitutes the closest prior art of the invention in subject. It discloses an open-loop/closed-loop all digital frequency offset estimator, whose performance is assessed in two different communication scenarios: a TDMA (Time Division Multiple Access) satellite link employing standard modulation and burst formats, and a mobile cellular terrestrial radio system of GSM (Global System for Mobile communications) type. In particular, the Functional block diagram of the receiver employs a closed-loop frequency tracker visible in Fig.12 of the article, which has largely inspired the architecture of the mobile station receiver suitable to operate in accordance with the frequency synchronisation method of the invention in subject. The novelty of the invention in subject, rather than the hardware architecture, will be recognisable by the comparison between the operation of a block named "APPLIES AND AVERAGES OVER L BURSTS" in Fig.12 of the article, and "AVERAGE CONDITIONER" in the annexed fig.6 to the description of the invention. In the cited article, as far as frequency error correction in TDMA satellite links concerns, good performances are attainable by calculating a suboptimal expression of the frequency error [(12) correspondent to the present expression (8)] in an open-loop configuration and averaging as a few as $L = 10 \div 20$ estimates for SNR (Signal to Noise Ratio) ranging from 5 to 10 dB on the ideal channel. This is made possible by the fact that the frequency error is unbiased under the assumed conditions, while in GSM case the open-loop is inapplicable due to a bias of the averaged frequency error around the point $\Delta f$ null; the bias being induced both by thermal noise and imperfect knowledge of the signalling pulse shape. The indicated remedy addresses the use either of a closed-loop or a mixed open-loop/closed-loop configuration.

The evolution towards third generation radiomobile systems forces the manufacturers of telecommunication apparatuses to test the tracking performances of the known frequency synchronisation algorithms in the new contexts, obviously after having introduced some adaptations for taking care of the different TDMA frame structures and the lengths of the involved synchronization sequences. Relevant tests can be performed through standard techniques based on theoretical analysis and computer simulations. 3GPP (3-rd Generation Partnership Project) committee responsible for standardisation in the new UMTS (Universal Mobile Telecommunication System) field exploiting CDMA (Code Division Multiple Access) technique, has standardised an UTRA (Universal Terrestrial Radio Access) interface for the User Equipment (UE). In the remaining part of the description MS and UE are synonyms. UTRA's standard establishes the minimum RF characteristics of the FDD (Frequency Division Duplex) and TDD (Time Division Duplex) mode. The FDD mode at 3.84 Mcps (Mega-chips-per-second) is also termed W-CDMA (Wideband). The TDD mode includes an HCR (High Chip Rate) option at 3.84 Mcps and a LCR (Low Chip Rate) option at 1.28 Mcps. Mostly features of the 1.28 Mcps standard has been jointly developed by the present Applicant and the CWTS (Chinese Wireless Telecommunication Standards) partner. The resulting system known as TD-SCDMA (Time Division - Synchronous CDMA) Radio Transmission Technology (RTT) has been proposed to the 3GPP by CWTS committee, it adopts the same physical layers as UTRA-LCR-TDD, differing from the last mainly because of the synchronization of the BTS between adjacent cells.

The method of the present invention is applicable in the majority of the known radiomobile systems of second and third generation (among them TD-SCDMA is the most intensively investigated in the Applicant's laboratories) so it's useful briefly review the physical layer of some well known radio interfaces, for example the ones relevant to GSM/DCS/GPRS, UTRA-FDD at 3.84 Mcps, and TD-SCDMA at 1.28 Mcps.

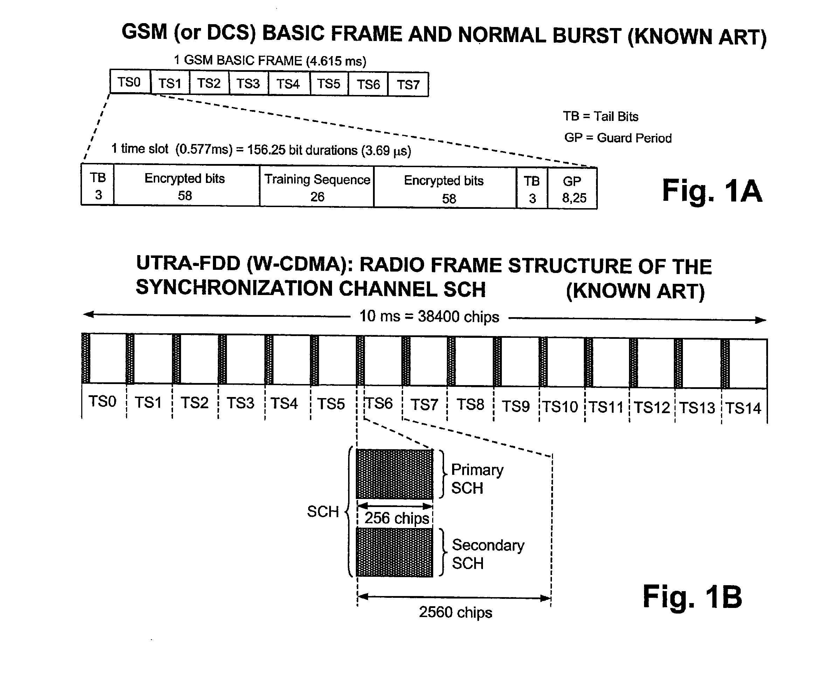

**Fig.1A** shows a basic GSM frame long 4.615 ms, including 8 timeslots each of 0.577 ms. The relevant MS physical layer is described in GSM 05.02, Version 8.0.1 (Release 1999). Each timeslot include a transmission burst selected among four different types of burst foreseen in all the system. For the aim of the invention the only Normal burst is depicted. This burst includes in the order: 3 Tail bits, 58 Encrypted bits (either payload or signalling), 26 bits of a Training sequence in midamble position, other 58 Encrypted bits, 3 Tail bits, and a Guard Period of three bit durations. Traffic and signalling multiframes and superframes complete the time hierarchy.

**Fig.1B** shows the downlink frame of the UTRA-FDD at 3.84 Mcps. The relevant UE physical layer is described in "3GPP TS 25.211, Version 4.2.0 (2001-09) Release 4". The frame is 10 ms long and includes 38,400 chips belonging to 15 timeslots TS0,....TS14, 2560 chips long. The first 256 chips of each timeslot are assigned to a downlink Synchronization Channel SCH used for cell search. The SCH channel consists of two subchannels, the Primary SCH and the Secondary SCH, whose digital patterns are not orthogonal with the other spread channels and can be distinguished from them even in a noisy environment. The primary SCH consists of a modulated code of 256 chips, named Primary Synchronization Code (PSC), which is the same for every cell in the system. The secondary SCH consists of a modulated code of 256 chips, named Secondary Synchronization Code (SSC), transmitted in parallel with the PSC code. The secondary SCH, after demodulation and SSC code detection, provides the particular combination of code and modulation sequence which jointly address the timeslot number and the scrambling code group of the target cell.

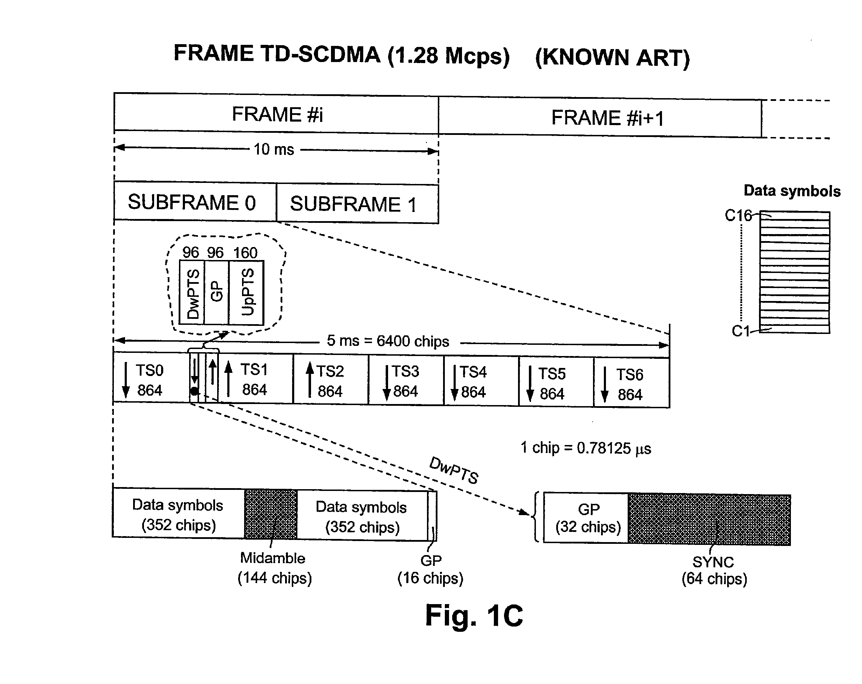

**Fig.1C** concerns both UTRA-TDD at 1.28 Mcps and TD-SCDMA. In **fig.1C** a basic TD-SCDMA radio frame is depicted. The basic frame (see 3GPP TS 25.221, Version 4.2.0 (2001-09) Release 4) has a duration of 10 ms and is divided into 2 subframes of 5 ms. The subframe structure is the same. Basic frames are nested into a multilevel TDMA hierarchical structure including superframes, etc. Each 5 ms subframe has 6,400 chips ($T_c$ = 0.78125 µs) subdivided into 7 timeslots for data (TS0,....TS6) of 864 chips, plus three special timeslots named DwPTS (Downlink Pilot Time Slot), GP (Main Guard Period), and UpPTS (Uplink Pilot Time Slot). TS-SCDMA can operate on both symmetric and asymmetric mode by properly configuring the number of downlink ($\downarrow$) and uplink ($\uparrow$) time slots and the switching point consequently. In any configuration at least one time slot (time slot#0) has to be allocated for the downlink, and at least one time slot has to be allocated for the uplink (time slot#1). The burst of data, at the bottom left of Fig.1C, includes a central midamble and two identical data parts. The data parts are spread with a combination of channelisation code (OVSF 1, 2, 4, 8, or 16) and scrambling code. The DwPTS burst, at the bottom right of Fig.1C, includes a Guard Period GP and a 64-chips SYNC sequence used for downlink frame synchronization. In this standard a downlink pilot code common to all the PLMN cells is not foreseen, while 32 SYNC sequences characterising the DwPTS pilot are available to be assigned on cell basis. There are 32 scrambling code groups univocally associated both to the 32 SYNC sequences and to 32 basic midamble code groups. Each scrambling code group includes 4 scrambling code, and each midamble code group includes 4 basic midambles. Inside a group the scrambling codes and the midambles are univocally associated. Once the SYNC of the target cell is detected the UE can determine the actually used basic midamble code using a try and error technique. The same basic midamble code will be used throughout the frame. As each basic midamble code is associated with a scrambling code, the scrambling code is also known by that time and the BCH (Broadcast Channel) information is accessible.

In all the radiomobile systems in which the invention is applicable, the reference oscillator included in the mobile telephone set is calibrated at the end of an initial cell search procedure, system dependent, whose aim is that to detect: the carrier of the target cell (the one with highest power), synchronise the timeslots (frame alignment), and acquire the BSIC (Base Station Identity Code) of the target cell. The precision in the knowledge of the frame alignment impacts the performances of the frequency synchronisation algorithms. As far as TD-SCDMA concerns the initial synchronisation procedure (cell search) is exhaustively disclosed in the International patent application PCT/IT02/00035, filed on 21-01-2002 by the same Applicant, and incorporate by reference. In this procedure the frame alignment is achieved with a sample rate of 1 chip (no oversampling), thus the maximum error results ½ chip.

**OUTLINED TECHNICAL PROBLEMS**

The target is to set the frequency of work of the UE with the accuracy at least of 0.1 ppm in respect to the frequency of work of the fixed Base Station (BS), as recited in the following 3GPP specifications for Narrowband TDD:

- For the UE: The UE modulated carrier frequency shall be accurate to within ±0.1 ppm observed over a period of one timeslot compared to carrier frequency received from the BS. These signals will have an apparent error due to BS frequency error and Doppler shift. In the later case, signals from the BS must be averaged over sufficient time that errors due to noise or interference are allowed for within the above ±0.1 ppm figure. The UE shall use the same frequency source for both RF frequency generation and the chip clock.
- For the BS: the modulated carrier frequency of the BS shall be accurate to within ± 0.05 ppm observed over a period of one timeslot for RF frequency generation.

Maximum residual offset as 0.1 ppm is recommended in the specifications of the most popular cellular systems. The frequency error committed at the end of the initial cell search is mainly related to the error of the reference oscillator of the MS/UE, because the frequency error of the transmitted carriers is already kept in the limit of the specifications by the BS. An error of about 10 ppm is assumed to be acceptable by almost all the frame alignment algorithms used in the initial cell search which precedes the calibration of the MS/UE reference oscillator. The requested stability of about 10 ppm can be reached, for example, using a TCXO (Temperature Compensated Crystal Oscillator) as a reference oscillator inside the UE. A generic commercial TCXO has a stability in temperature of about +/-2.5 ppm in the temperature range from -30 to +75 °C and a fixed error of about +/-2 ppm; taking care for the ageing the stability of a commercial TCXO matches the 10 ppm requirements.

A first attempt in order to correct the initial frequency error has been carried out using the method and the architecture of the closest prior art addressed to the GSM environment. In a GSM context the only sequence useful in a Data Aided Algorithm for frequency correction is the training sequence located in the midamble position of each normal burst. Synchronisation Channel SCH is not advisable for averaging the acquisitions upon $L$ frames because it is discontinuously transmitted (1 out of 9 frames). In the UMTS systems a Data Aided Algorithm can use both the downlink synchronization codes and midambles. As will be plentiful clarified later, the known mathematical expression for calculating the frequency error intrinsically limits the estimable frequency error $\Delta f$ in the following range:

$$\Delta f < \frac{1}{T_c(M + 1)}$$

where: $T_c$ is the chip-time, $M \equiv N/2$, and $N$ is the length of the training sequence used in the data aided algorithm. A primary bound for the applicability of a frequency calibration method is that the maximum offset $\Delta f_{max}$ calculated using the known mathematical expression (8) be greater than 10 ppm, in order to allows the maximal correction. The calculated $\Delta f_{max}$ value depends on the chip-rate (or bit-rate) together with the characteristics of the physical layer of the considered standard, wile the 10 ppm numerical value depends on the PLMN's assigned band. In particular it can be easily verified the following cases:

- GSM-900 MHz- **fig.1A -** ($T_c$ = 3.69μs, $N$ = 26) the calculated $\Delta f_{max}$ is 19.35 kHz, the required 10 ppm stability of the TCXO is in the order of ±9 kHz, widely entering into the range of validity of the expression (8). The 0.1 ppm calibration error is ±90 Hz.
- GSM-1800 MHz- **fig.1A -** ($T_c$ = 3.69μs, $N$ = 26) the calculated $\Delta f_{max}$ is 19.35 kHz, the required 10 ppm error is in the order of ±18 kHz, entering into the range of validity of the expression (8). The 0.1 ppm calibration error is ±180 Hz.
- CDMA-TDMA-FDD - **fig.1B -** ($T_c$ = 0.26μs, $N$ = 256) the calculated $\Delta f_{max}$ is 29.8 kHz. The assigned band is located around 2 GHz and the 10 ppm error is in the order of ±20 kHz, which enters into the range of validity of the expression (8). The 0.1 ppm calibration error is ±200 Hz. Because of SCH sequences (256 chips long) are transmitted each timeslot (2560 chips long), up to 15 Primary synchronisation sequences per frame are, in theory, usable to speed up the initial calibration. In such a case a limitation is posed by the real-time constraint of the dedicated DSP.
- CDMA-TDMA-TDD system with High Chip Rate (HCR) option at 3.84 Mcps. The relevant UE physical layer is described in the same 3GPP TS 25.221 as the LCR option at 1.28 Mcps. The frame is 10 ms long and includes 38,400 chips belonging to 15 timeslots TS0,....TS14, each of 2560 chips. One or two timeslots 8 positions spaced apart (i.e. TS0 and TS8) belong to the Synchronization frame, the first 256 chips of each Synchronization timeslot are assigned to a downlink Synchronization Channel SCH. The frame is similar to the preceding one of **fig.1B** ($T_c$ = 0.26μs, $N$ = 256) and the 10 ppm stability enters into the range of validity of the expression (8) similarly. The 0.1 ppm calibration error is ±200 Hz.
- TD-SCDMA - **fig.1C -** with SYNC code as training sequence in the expression (8) - ($T_c$ = 0.78125μs, $N$ = 64) the

calculated $\Delta f_{max}$ is 38 kHz. The assigned band is located around 2 GHz and the 10 ppm error is in the order of $\pm 20$ kHz, which enters into the range of validity of the expression (8). The 0.1 ppm calibration error is $\pm 200$ Hz. Taking instead the midamble as training sequence - ($T_c = 0.78125\mu s$, $N = 144$) the calculated $\Delta f_{max} = 17$ kHz. In such a case the 10 ppm error of $\pm 20$ kHz falls outside the range of validity of the expression (8) and is not corrigible. The choice of using the SYNC sequence in the calibration procedure allows the use of a low-cost commercial TCXO but, due to the short length (64 chips), the asymptotic accuracy is not sufficient to guarantee a frequency error $\Delta f$ lower than $\pm 200$ Hz with acceptable probability. On the contrary the choice of the longer midamble sequence (144 chips) in the calibration procedure guarantees a frequency error $\Delta f$ lower than $\pm 200$ Hz with acceptable probability, but a more expensive and precise reference oscillator is needed. A trade-off solution between the two requirements is needed.

The TD-SCDMA narrowband system at 1.28 Mcps has been tested with the tracking method of the closest prior art introducing the following hypotheses:

- a **closed-loop** configuration is used in a realistic simulation of the propagation channel model described in: TR 101 112 v3.2.0, "Universal Mobile Telecommunications System; Selection procedures for the choice of radio transmission technologies of the UMTS (UMTS 30.03 version 3.2.0)", using the ITU vehicular channel A, with Mobile speed 120 km/h and C/I (Carrier to Interference power ratio) = -3 dB;
- midamble is used;
- frequency error is averaged on $L$ = 5 frames;
- the size of the corrective step [indicated as $\gamma$ in (24) of the citation, or $K$ in (10) of this description] is set = 0.1;
- the initial frequency offset starts from near 600 Hz (0,3 ppm) so that the limitation on the use of the midamble is removed.

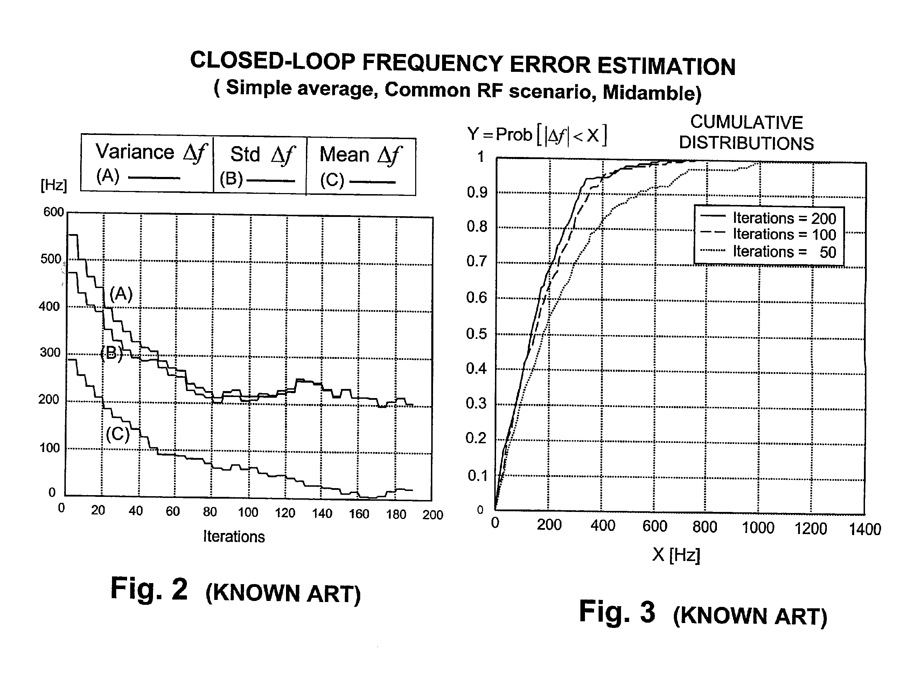

**Figures 2 and 3** show the results of the simulation session. **Fig.2** shows three curves representing as many plots in function of the number of iterations of the simple mean of the frequency error $\Delta f$, Variance, and Standard deviation Std calculated on the considered set of 5 frames. **Fig.3** shows three cumulative distributions of the frequency errors for 50, 100 and 200 iterations of the estimation process. The two Figures clearly demonstrate that (although the starting $\Delta f$ value be drastically reduced) the performances of the known algorithm are not yet acceptable in the new UMTS environment, that because Standard deviation and Variance constantly remain upper 0.1 ppm bound (200 Hz), and the error probability to reach the accuracy of 0.1 ppm (200 Hz) is as low as 67% after 200 iterations. It can be conclude that in the new UMTS context the investigated method of the prior art has strong difficulties to respect the lower bound of 0.1 ppm under the realistic hypotheses taken for simulation and, in any case, the convergence is too slow. A reasonably way to increase the asymptotic accuracy, particularly useful in noisy channels, could be that to reduce the corrective step of the frequency offset estimation, but so doing still more iterations are needed to achieve the desired accuracy. The drawbacks of the known method pointed out considering the TD-SCDMA system have a quite general nature and could also be proved considering other standards.

## OBJECTS OF THE INVENTION

The main object of the present invention is that to overcome the drawbacks of the prior art and indicate a frequency synchronisation method based on the known expression (8) for calculating a frequency error $\Delta f$ to be used in a feedback loop for correcting the frequency of the local oscillator, maintaining a maximum residual offset as 0.1 ppm suitable to be exploited in the most popular cellular systems and in particular TD-SCDMA.

Another object of the invention is that to speed up the convergence towards the 0.1 ppm calibration error.

Another object of the invention is that to indicate a trade-off criterion for TD-SCDMA between the use of SYNC code and Midamble code as training sequence in the error estimation.

Another object of the invention is that to face noisy channel without slowing down the convergence of the method.

## SUMMARY AND ADVANTAGES OF THE INVENTION

To achieve said objects the subject of the present invention is a closed-loop frequency synchronisation method which discards in the average process all the $\Delta f$ terms with a sign different from the majority, as disclosed in claim 1. The main advantage is that to increase the reliability, and therefore the precision, of the frequency correction. Additional features of the method are disclosed in the appended claims. In accordance with the appended claims the method of the invention introduces a set of variants offering new opportunities in the average process for the estimation of the frequency error in respect of the simple average of the prior art.

A first variant is that to limit the sign criterion used in the average process with the standard deviation σ of the averaged subset. In order to evaluate the entity of the corrective effect, the standard deviation σ has to be compared with a reference value. Due to the lack of an absolute reference value the standard deviation of the last not null frequency correction is used instead.

A second variant is that to last a minimum number of frames between two non-null frequency corrections derived by the sign criterion used in the average process. This variant involves the convergence time of the method and its accuracy, additionally it increase the stability of the digital loop.

A third variant is that is that to last a minimum number of frames between two non-null frequency corrections derived by the second variant. This variant increases the advantages of the preceding implementations.

A fourth variant is that of dynamically configuring the various estimation parameters. More precisely, in the initial group of iterations a parameter set with a high value for the step size ($\approx 0.1$) is chosen, obtaining fast convergence, than a lower value is chosen ($\approx 0.05, 0.01$) in order to achieve the final required accuracy. The approach is useful to face particularly noisy channels.

The aforementioned variants are associated to as many estimation parameters to be optimised. These parameters together with the size $K$ of the correction step and the length $L$ of the error buffer, constitute a set of five interrelated parameters which can be finely tuned to reach maximum accuracy in the estimate and fast convergence in the majority of the real channels and various mobile speeds. Thus the invention effectively allows the calibration of the UE's local oscillator to the precision of 0.1 ppm as requested by the various standards.

According to a fifth variant, the problem of accelerating the convergence is solved by introducing a preliminary open-loop estimate which quickly reduces the initial frequency offset from 10 ppm to less than 2 ppm, hence, the estimation loop is closed to reach the 0.1 ppm. For the sole TD-SCDMA system, in accordance with a sixth variant of the invention, the short SYNC is used in the preliminary open-loop estimate while the longer midamble is switched upon the introduction of the closed-loop estimate. Simulations of the open-loop/closed-loop approach show that the initial open-loop estimation allows to quickly reduce the frequency offset from 20 kHz to less than 2 kHz in little more than 10 iterations, saving time to the successive closed-loop estimation which starts more relaxed. The open-loop/closed-loop error estimation acts like a synergetic combination assuring a final accuracy of 0.1 ppm in near 0.5 seconds, even if the initial frequency error is in the range of 10 ppm. The fifth/sixth variant of the invention is different from the mixed open-loop/closed-loop configuration suggested in the closest article, where the term mixed doesn't suggest a switch between the two configurations inside the same estimation process but rather two separate strategies to execute the average in different processes.

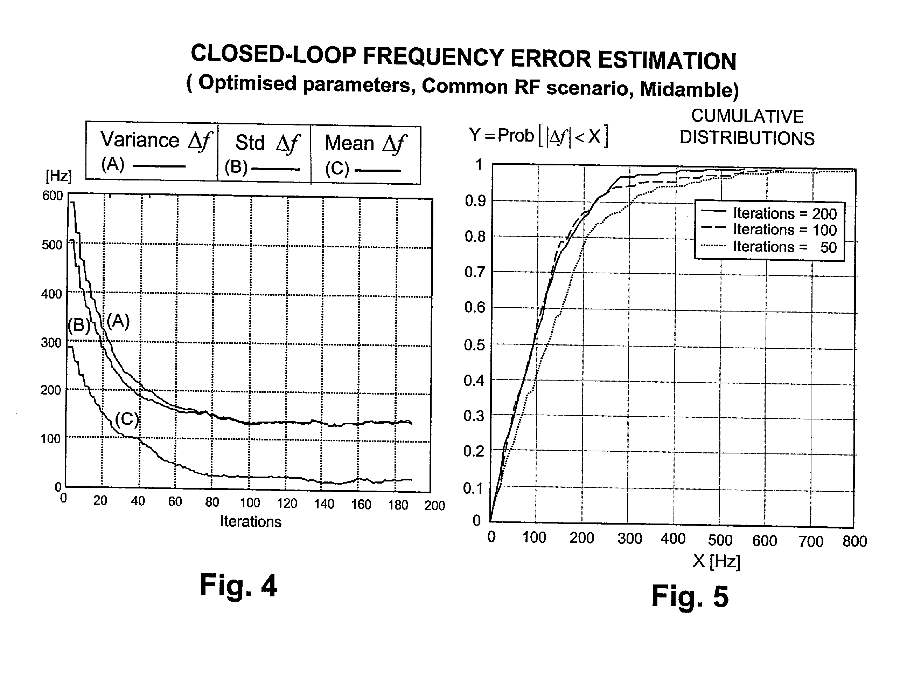

**Figures 4 and 5** show the results of a simulation session relative to the method of the invention, in which the adopted channel parameters are still those leading to the curves of **Figures 2 and 3** obtained with the simple average of the stored errors. In particular, **Fig.4** shows that after 50 iterations both Standard deviation and Variance are under the bound of 200 Hz, contrarily to the lack of convergence towards this bound visible in **fig.2. Fig.5** shows that the error probability to reach the accuracy of 0.1 ppm (200 Hz) is 87% after only 100 iterations, against 67% after 200 iterations of the curves of **fig.3.** From the foregoing it can be concluded that the method of the present invention fulfils its objects in all the most popular cellular systems of the second and third generation, indifferently.

Other subject of the invention is a mobile station (or user equipment) including means operating in conformity with the method of the invention and its variants, as disclosed in the relative claims.

## BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:

- **Figures 1A, 1B, e 1C** show standard radio frames for GSM, UTRA-TDMA-FDD, and UTRA-TDMA-TDD (or TD-SCDMA) respectively;
- **Figures 2 and 3** show simulation curves of the frequency offset estimation according to a method of the closest prior as if were used in the TD-SCDMA UTRA scenario;
- **Figures 4 and 5** show comparative simulation curves according to the method of the present invention used in the TD-SCDMA UTRA scenario;
- **fig.6** shows an User Equipment architecture including an AVERAGE CONDITIONER block operating in accordance with the method of the invention;
- **Figures 7 to 13** show as many block diagrams relative to the steps of the frequency synchronisation method of the invention;
- **Figures 14 to 29** show other simulation curves according to the method of the present invention, and its variants, used in the TD-SCDMA UTRA scenario;

- **fig.30** reproduces a **TABLE 1** including values of a multipath fading description according to TR 101 112.

## DETAILED DESCRIPTION OF SOME EMBODIMENTS OF THE INVENTION

With reference to **fig.6** a functional block diagram of an UE RECEIVER suitable to perform the frequency synchronisation method of the invention is reproduced. The depicted architecture although referred to the TD-SCDMA is widely general and, except for some details (i.e. SPRq, SYNC), it could be also referred to an MS receiver of GSM type. For the sake of completeness the channel, as seen at the reception antenna, is also modelled in fig.6. In the considered channel model $s(t)$ indicates the transmitted signal, $c(t)$ is a channel fading process (i.e Rayleigh), and $n(t)$ is used to model the thermal noise and the multi-user interference (both intra-cell and inter-cell). At the input of the UE RECEIVER is visible a reception signal $r(t)$ which reaches a front-end FR-END block including a band-pass RF filter and a low-noise receiving amplifier (both not visible). At the output of the front-end the RF signal is down-converted to baseband by a DOWNCONV block including an analog mixer piloted by a sinusoidal signal $ol(t) = e^{j2\pi(f_0+\Delta f)kT_c+\vartheta}$ generated by a local oscillator TCXO. The term $exp(j2\pi\,\Delta f\,kT_c + \vartheta)$ is used to model the phase rotation in the baseband of the received signal, as a result of a frequency error equal to $\Delta f$. The value of $\vartheta$ is not relevant, thus in the following has been set to zero to simplify the notations. At the output of the DOWNCONV block the cascade of the following blocks is connected: SAMPLER, A/D, FRAME BUFFER, RRC FILTER, and DATA DETECTOR. Signal $ol(t)$ is split and $\pi/2$ phase offset, then applied to a shaded second DOWNCONV block whose output is connected to the chain of shaded blocks SAMPLER, A/D converter, FRAME BUFFER, and RRC FILTER in its turn connected to the unshaded block DATA DETECTOR. Shadowing indicates the in-quadrature path while unshaded blocks are referred to the in-phase path. From now on the only in-phase path is considered for the sake of simplicity. The SAMPLER block samples the baseband reception signal $r(t)$ at a sample frequency $1/T_c$ ($T_c$ = 0.78125 µs in case of TD-SCDMA) that fulfils the Nyquist criterion because data symbols are generated from two interleaved and encoded data bits assigned to the in-phase and in-quadrature paths, respectively. The analog sampled signal is digitally converted and stored into the memory block labelled FRAME BUFFER, which has room to store about a set of 5 ms of the digital signal (a subframe TD-SCDMA), or more set summed up for the need of some average processes of the initial synchronisation procedure. Frequency down conversion from RF to baseband is performed in two steps: firstly, RF to IF (Intermediate frequency) where the IF signal is filtered around the band of interest, secondly IF to baseband and low-pass filtering. There are generally no restraints with the hardware architecture used for the UE, so that the DOWNCONV block could be realised in accordance with two hardware options relevant to either a wideband or narrowband receiver, respectively. Considering the wideband receiver the bandwidth of both the RF and IF filters is equal to the assigned bandwidth (i.e. 20 MHz). The whole RF signal is converted to IF multiplying the received signal $r(t)$ by the analog signal $ol(t)$ with fixed-frequency. The IF signal is Analog-to-Digital converted by a fast A/D and the stored 5 ms digital set concerns the whole band. The stored set is then digitally multiplied by an IF sinusoid tuned in a way to baseband convert the target frequency only. Considering the narrowband receiver a first alternative is that both the RF and IF filters have the channel bandwidth (1.6 MHz), a second alternative is that the RF filter is wideband (20 MHz) and the IF filter has the channel bandwidth. In the two alternatives the selected RF channel is converted to IF multiplying the received signal $r(t)$ by an analog signal $ol(t)$opportunely tuned. The IF signal is Analog-to-Digital converted by a slow A/D and the stored 5 ms digital set concerns the selected channel only. The stored set is then digitally multiplied by an IF sinusoid having fixed frequency in order to baseband convert the IF channel.

Digital signal stored into the FRAME BUFFER is sent to the RRC FILTER block, which is a low-pass Root Raise Cosine (RRC) filter with roll-off $\alpha$ = 0.22 and 1.6 MHz bandwidth, obtained multiplying the chip-rate of 1.28 Mcps by (1+$\alpha$). The filtered signal $r_k$ is split up into two signals, a first one reaches the input of the DATA DETECTOR block, the second one reaches the input of the following blocks: ALIGNER & MODULATION CANCELLER, SYNC-DET, and MID-DET. The DATA DETECTOR block receives other two digital signals, the detected midamble MID and one, or more, spreading sequences SPRq, and generates an estimate $\{d\}$ of the original data sequence transmitted by the BS during the two data portions of the downlink burst of the timeslot assigned to the user. Data detection is not particularly concerned in the present invention which only exploits the midambles MID and/or the pilot synchronisation sequences SYNC for the aim of correcting the frequency error of the signal $ol(t)$. For the only sake of completeness, data sequence $\{d\}$ is generated in known manner decorrelating the characteristic signature of the user connected to the BS from the sequence $r_k$. The characteristic signature is obtained convoluting the assigned spreading code SPRq with the channel pulse response estimated in correspondence of the midamble MID transmitted in the assigned timeslot. The decorrelated sequence is descrambled with the scrambling code associated to the midamble MID and successively decoded and de-interleaved to obtain the final data sequence $\{d\}$ forwarded to a terminal device (not shown). An internal UE PROCESSOR block controls the operation of the UE RECEIVER. The UE PROCESSOR includes a microprocessor, a relative RAM, bus interface, and a ROM for storing the microprocessor firmware. The UE PROCESSOR is connected via an internal bus to almost all the visible blocks, and with a SIM card (Subscriber Identity Module) which stores the bands of interest and all the permitted carriers inside a band (the channel raster). Without limitations, the functions of most operational blocks are directly implemented by the UE PROCESSOR. A memory block SPREAD MEM stores the spreading codes SPRq used in the system. Two memory blocks SYNC MEM and MIDAM MEM store the 32 SYNCs and the 128 midambles foreseen in the whole > system, respectively. Block SYNC MEM is connected to the input of a SYNC detector at whose output one out of 32 detected SYNC and the relevant $\Delta T_s$ chip delay from the beginning of the frame are provided. Block MIDAM MEM is connected to the input of a midamble detector MID-DET at whose output one out of 4 detected midamble and the relevant $\Delta T_m$ chip delay from the beginning of the frame are provided. The outputs of SYNC-DET and MID-DET are connected to a respective input of a switch device COM controlled by a signal sel coming from the UE PROCESSOR. Blocks: SIM CARD, SYNC MEM, MIDAM MEM, SYNC-DET, and MID-DET are dotted to indicate their use in the general synchronisation process preceding the actual frequency calibration according to the present invention, as disclosed in the cited patent application filed by the same Applicant.

At the output of the switch COM both the selected complex symbol $\alpha_i$ and delay $\Delta T$ are supplied to the shaded block ALIGNER & MODULATION CANCELLER, which also receives the sequence $r_k$ and outputs the sequence $y_i$. In the operation, the useful information data for the frequency error estimation algorithm is collected in the phase term $exp(j2\pi \Delta f\, kT_c)$, so that the original phase modulation due to the transmitted symbols has to be removed from the signal. This operation is allowed in the signal window where the training sequence is located, multiplying the received signal by the conjugate symbols of the used training sequence (DwPTS or midamble in TS0). Thus the useful part of the signal after frame alignment in an equalised (ideal) channel environment results:

$$r_k = d_k e^{-j2\pi\, \Delta f\, kT_c} + n_k$$

$$y_i = r_{i-\Delta} a_i^* = a_i a_i^* e^{-j2\pi\Delta f(i-\Delta)T_c} + v_i' = e^{-j2\pi\Delta f(i-\Delta)T_c} + n_k' \qquad 1 \le i \le N$$

where $d_k$ is a generic data symbol, $\Delta$ is the delay (in chips) that aligns the received data with the training sequence and the $a_i$ ($i = 1, \cdots N; a_i a_i^* = 1$) are the training symbols of the SYNC code ($N = 64$) or midamble code ($N = 144$). The $y_i$ samples are the input data for the frequency estimation algorithm, they are directed to an ERROR ESTIMATOR block which calculates the frequency error $\Delta\tilde{f}_i$ which is a tentative value for the true $\Delta f$. The operation of the ERROR ESTIMATOR block coincides with the relevant teaching of the cited article of the closest prior art. To make the description self contained, a brief description of the procedure leading to the final formula for $\Delta\tilde{f}$ is resumed. The maximum likelihood (ML) estimation of the frequency error $\Delta f$ starting from the observation of the sampled signal $y_k$, involves the maximisation of the function:

$$\Lambda\left(\Delta\tilde{f}\right) \equiv \left|\sum_{k=1}^{N} y_k e^{-j2\pi\Delta\tilde{f}\, kT_c}\right|^2 \qquad\qquad (1)$$

where $\Delta\tilde{f}$ is a tentative value for $\Delta f$. Taking the derivative of (1) with respect to $\Delta\tilde{f}$ and equating it to zero yields:

$$\sum_{k=1}^{N}\sum_{m=1}^{N}(k-m)y_k y_m^* e^{-j2\pi\Delta\tilde{f}T_c(k-m)} = 0 \qquad\qquad (2)$$

or rearranging terms:

$$Im\left\{\sum_{k=1}^{N-1} k(N-k)R(k)e^{-j2\pi\Delta\tilde{f}\, kT_c}\right\} = 0 \qquad\qquad (3)$$

where $R(k)$ is the autocorrelation function over $y_k$ and is defined as:

$$R(k) \equiv \frac{1}{N-k} \sum_{k=1}^{N-1} y_i y_{i-k}^* \qquad\qquad 0 \leq k \leq N-1 \qquad\qquad (4)$$

Equation (3) represents a necessary condition for the existence of a solution to the maximisation problem. Particular care must be taken in order to avoid those zeroes of (3) corresponding to local maxima of (1) different from the solution of the likelihood equation (the absolute maximum). The false maxima can be avoided by appropriately restricting the operative range of the estimator, as will be shown in the sequel. In a suboptimum implementation of the frequency estimator the term $w(k) = k(N\text{-}k)$ can be replaced by a rectangular sequence made up of all 1's, $k = 1,2,...,M; M \leq N - 1$. Thus we obtain the following modified estimation strategy:

$$Im\left\{ \sum_{k=1}^{M} R(k) e^{-j 2\pi \Delta\tilde{f} kT_c} \right\} = 0 \qquad\qquad (5)$$

For an ideal noiseless channel, $R(k) = exp(j2\pi \Delta f kT_c)$ and $\Delta\tilde{f} = \Delta f$ is still a trivial solution of the modified estimation strategy (3). When noise is present, the solution of (3) and (5) will differ but, with a proper choice of $M$, their mean squared distance is expected to be negligible. Under the assumptions of high CNR and low frequency deviation ($M \cdot \Delta f \cdot T_c << 1$), an appropriate way of solving (5) can also be advised. In fact, replacing the exponential in (5) by its Taylor series expansion truncated to the linear term and rearranging, we get:

$$\Delta\hat{f} \cong \frac{1}{2\pi T_c} \frac{\sum_{k=1}^{M} Im\{R(k)\}}{\sum_{k=1}^{M} k\, Re\{R(k)\}} \qquad\qquad (6)$$

which immediately yields the estimate of $\Delta\tilde{f}$. A simpler version of (6) results by arguing that under the above assumptions:

$$R(k) = exp(j2\pi \Delta f kT_s) + \tilde{n}_k \cong 1 + j2\pi \Delta f kT + \tilde{n}_k,$$

with $\tilde{n}_k$ an appropriate noise term, $|\tilde{n}_k| << 1$, so that:

$$\sum_{k=1}^{M} Im\{R(k)\} \cong M\, arg\left\{ \sum_{k=1}^{M} R(k) \right\}$$

$$\sum_{k=1}^{M} k\, Re\{R(k)\} \cong \frac{M(M+1)}{2} \qquad\qquad (7)$$

where $arg(z)$ denotes the argument of the complex number $z$, taken in the interval $[-\pi,\pi]$. Collecting (6) and (7), we are finally led to:

$$\Delta\tilde{f} \cong \frac{1}{\pi T_c (M+1)} arg\left\{ \sum_{k=1}^{M} R(k) \right\} \qquad\qquad (8)$$

which represents the final form of the frequency estimation algorithm we will focus in the following. We note that $\Delta\tilde{f}$ is

correctly determined as long as the argument of the summation at the right-hand side of (8) does not exceed $\pm \pi$. This limits the operating range of the frequency recovery scheme to the already said interval:

$$\Delta \tilde{f} < \frac{1}{T_c(M+1)} \qquad (9)$$

In (8) the value of the parameter M has been optimised comparing the Asymptotic Error Variance (AEV) of the algorithm with the Cramér-Rao Lower Bound (CRLB). The optimum value results approximately $N/2$ when $N >> 1$, this is true also for the SYNC code ($N = 64$). It's useful to remind that in the considered TD-SCDMA the maximum frequency error that can be recovered by the use of relation (8) depends on the choice of the training sequence: 38 kHz for the SYNC code ($N=64$, $M=32$) and 17 kHz for the midamble ($N=144$, $M=72$).

A memory block ERROR BUFFER receives the error $\Delta \tilde{f}_i$ calculated at frame-time, stores it, and supplies its content to a downstream block AVERAGE CONDITIONER. The last calculates an average frequency error $\Delta f_i$ (the estimated error) depending on the type of mean selected by the UE PROCESSOR through a command cond. The ERROR BUFFER block is a shift register, also parallely accessible, which upon the reception of a command upd coming from the AVERAGE CONDITIONER block updates its content by opportunely scaling (subtracting) the latter estimated frequency error $\Delta f_i$. The error $\Delta f_N$ reaches the input of a block FREQUENCY CORRECTOR which calculates a current updated value of the frequency $f_i$ of the local oscillator output signal $ol(t)$. The updated value is supplied to the UE PROCESSOR that translates it into an updated control signal $vcor(f_i)$ of the TCXO local oscillator.

In the operation, the UE RECEIVER of **fig.6** is a sort of digital PLL able to operate either in open-loop or closed-loop configuration depending on the selection of the one or the other of the two functional configurations inside the block AVERAGE CONDITIONER. In an open-loop configuration the loop is closed only once at the end of having averaged the error over many frames in order to correct the frequency $f_i$, instead in a closed-loop configuration the correction of the frequency $f_i$ is repeating at frame-time, or few frame-times. As already said, an open-loop scheme taken alone is not enough to correct the error bias, nonetheless it can be profitably introduced ahead the closed-loop correction to quickly reduce the initial frequency offset. In the article of the closest prior art concerning GSM a quite severe definition of open-loop estimation is given, i.e. the loop is open if the frequency $f_i$ is updated from the observation of (non-overlapping) groups of $L$ consecutive bursts, with every estimate used to correct the frequency offset in the subsequent $L$ bursts replacing the preceding ones.

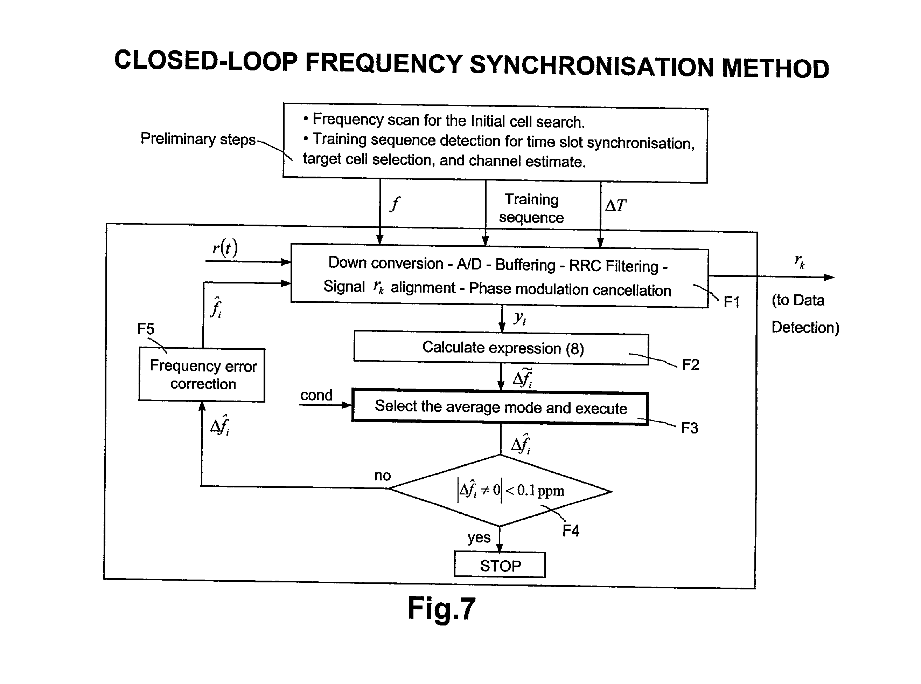

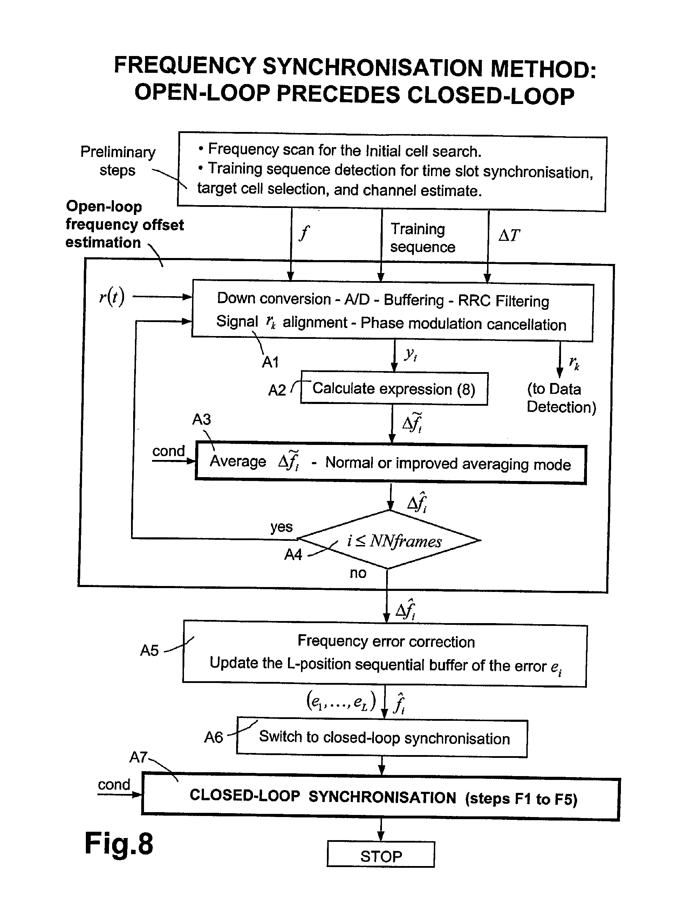

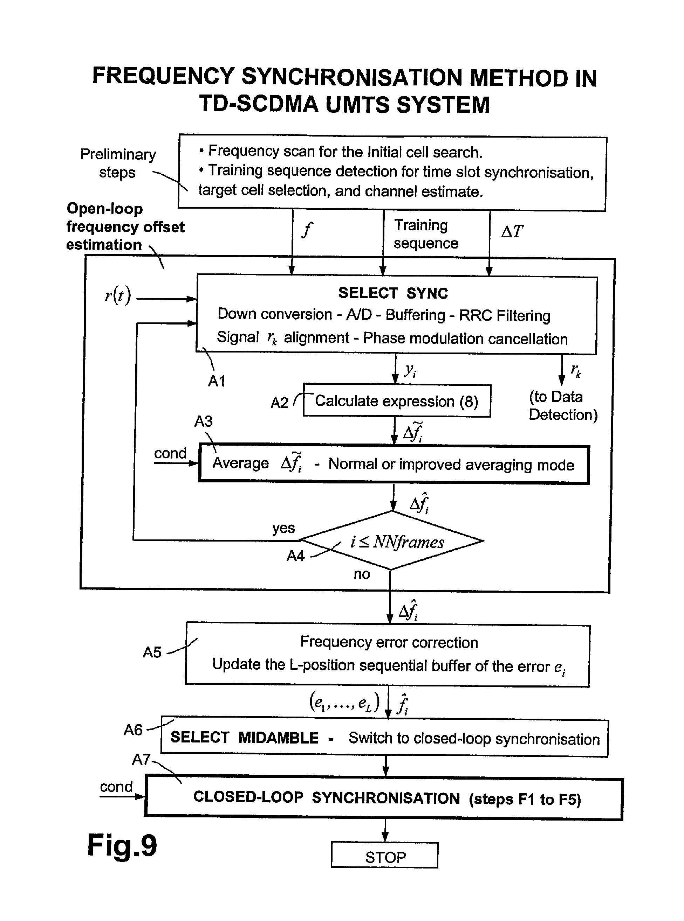

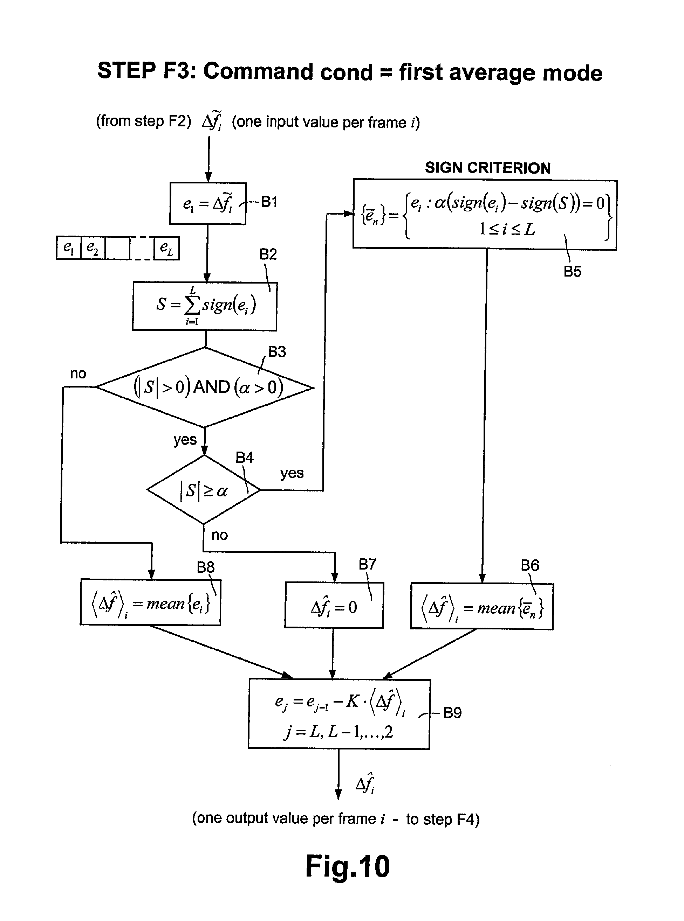

Now the frequency synchronisation method of the invention is disclosed with reference to the **Figures 7 to 13** relevant to as many flow-charts of the firmware which controls the UE PROCESSOR **(fig.6)** in order to carry out the calibration of the present invention and its variants. **Figures 7, 8 and 9** concern as many realisation of the whole method of the invention without the details of the average steps, while the **Figures 10 to 13** concern those details. **Fig.7** shows the most general closed-loop form of the method, **Figures 8 and 9** show a closed-loop implementation preceded by an open-loop. **Fig.8** (fifth variant) concerns the generality of the radiomobile standards except the TD-SCDMA, while **Fig.9** (sixth variant) concerns the only standard TD-SCDMA.

With reference to **Fig.7** the frequency synchronization algorithm starts after the completion of some Preliminary steps of the cell-searching procedure used in those cellular system where the present invention is realised. Candidate cellular systems are the ones having a "qualified" training sequence sufficiently long to assure a reasonably fast convergence towards 0.1 ppm in a configuration solely closed-loop, starting with the maximum initial offset of approximately 10 ppm. Possible training sequences are the midamble of the Normal burst in GSM/DCS/GPRS and the Primary SCH both in UTRA-FDD and UTRA-TDD at 3.84 Mcps. Unfortunately as concerns UTRA-TDD at 1.24 Mcps and TD-SCDMA the sole closed-loop estimation is inapplicable, firstly, because the midamble doesn't satisfy the (8) at 10 ppm, and secondly, because the SYNC code which satisfies the (8) is too short to converge. For the qualified systems the blocks dotted in **fig.6** are involved in the preliminary steps for the acquisition of the target cell, in particular: frequency $f$, Training sequence $\{a_i\}$, timeslot synchronisation delay $\Delta T$. At the end of the Preliminary steps a cumulative step F1 is performed on the received signal $r(t)$. Step F1 includes: Downlink frequency conversion, A/D conversion, digital Buffering, RRC filtering, picking up (alignment) the training sequence included in the sequence $r_k$, and cancellation of the phase modulation in correspondence of the picked up training sequence to obtain the useful sequence $y_i$. The operations performed in F1 are those already discussed speaking about the shaded blocks of **Fig.6.** During the next step F2 the mathematical expression (8) calculates the frequency error $\Delta \tilde{f}_i$ forwarded to the average step F3 for obtaining the estimated frequency error $\Delta f_i$ in accordance with the invention, and its variants, introduced by the content of the command cond. A detailed explanation of step F3 will be given with reference to the **Figures 10 to 13.** Step F4 tests the module of the estimation $\Delta f_i$ to check if a non-null estimate is lower than 0.1 ppm; if the answer is "no" a corrective step F5 is performed on the preceding estimated frequency $f_{i-1}$ in order to obtain an actual frequency $f_i$ that closes the loop back to the step F1; if the answer is "yes" the requested precision is reached and the algorithm stopped.

A reasonably hypothesis to halt the algorithm is that the frequency $\hat{f}_i$ remains stable for a time longer than the longest data session, otherwise the correction shall be performed during all the connection. Commercial TCXO, once calibrated, maintain the calibration enough to satisfy the hypothesis. In closed-loop configuration the final accuracy is also related to the number of recursive iterations allowed to the procedure. A large number of iterations usually guarantee better accuracy but, obviously, leads to a longer procedure. A key role in the accuracy of the method is played by the entity of the correction executed in the corrective step F5. The resulting relation for the frequency estimation is:

$$\hat{f}_i = \hat{f}_{i-1} + K\Delta\hat{f}_i , \qquad (10)$$

where $K$ ($0 < K \leq 1$) is a weighting constant of the estimated error $\Delta\hat{f}_i$ . Relation (10) is also the discrete time response of the FREQUENCY CORRECTOR block included in the digital PLL loop of **fig.6**. The frequency response and the transitory behaviour can be profitably studied considering the domain of the z-transform. The transfer function $H_{LF}(z)$ of the FREQUENCY CORRECTOR block is:

$$H_{LF}(z) = \frac{K}{1 - z^{-1}} \qquad (11)$$

The complete response of the digital loop is given by taking into account the transfer function of the cascaded blocks ERROR BUFFER and AVERAGE CONDITIONER, to say the $\Delta f_i(z)$ function, which provides the zeroes of $H_{LF}(z)$ needed to set the right low pass response of the digital PLL. From the detailed analysis of said cascaded blocks $H_{LF}(z)$ appears as a function of a combination of various parameters, i.e. $\Delta f_i(z,L,K,\alpha,\beta,\lambda)$, that extend the capacity to match fast convergence with high precision of the loop .

With reference to **Fig.8** the algorithm, after the Preliminary steps, enters into an open-loop estimation including steps A1 to A6, to which follows a closed-loop estimation A7 including the steps F1 to F5 of **Fig.7.** Steps A1 and A2 are like the steps F1 and F2. Step A3 differs from F3 mainly because either a simple average or a first average opportunity offered by the invention is selected by the command cond. Since there is not any feedback corrective action, the average is executed considering a number of *NN* frames, known in advance, able to guarantee a rapid reduction of the initial frequency offset from 10 to less than 2 ppm in a real environment. Alternatively, the error $\Delta f_i$ can be compared with the initial accuracy, for example 2 kHz, in step A4. Once in querying step A4 the number *NNframes* is surpassed, an unique frequency error correction is performed in step A5 using the expression (10), and the content of the sequential ERROR BUFFER (**fig.6**) is updated as will be explained illustrating the step B9 of **fig.9.** In the next step A6, an opportune value of the command cond switches the algorithm to the closed-loop operation of **Fig.7** forwarding to it a provisionally corrected reference frequency $f_i$ and the relevant updated content ($e_I,..., e_L$) of the error buffer.

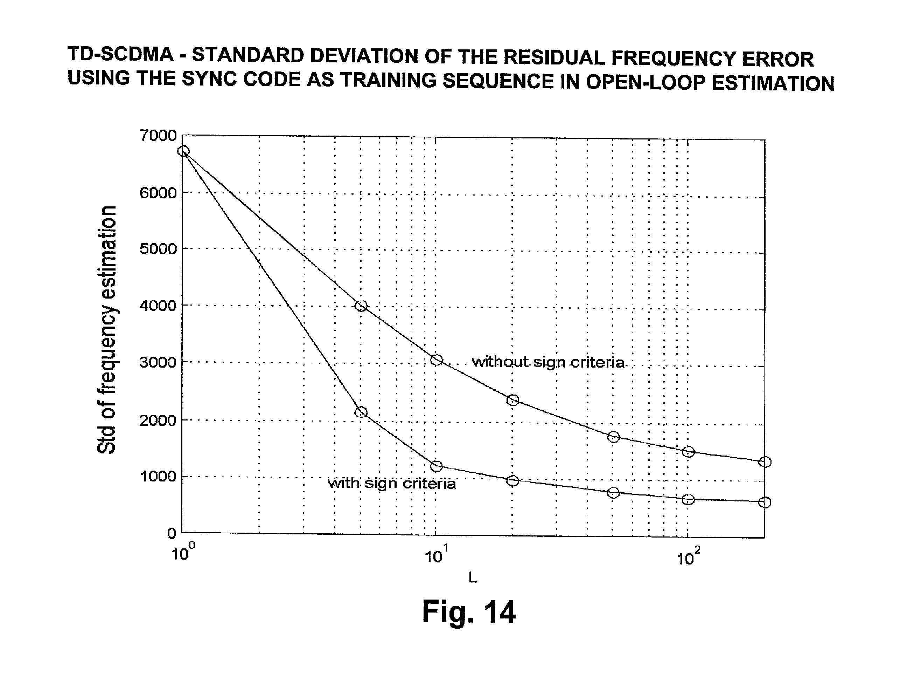

The frequency synchronization algorithm of **Fig.9,** specific for TD-SCDMA, differs from the algorithm of **Fig. 8** mainly because the open-loop estimation is performed on the short SYNC sequence selected in step A1, while in step A6 the longer midamble is selected before switching to the closed-loop algorithm of **Fig.7**. The selection of the SYNC code is mandatory because the initial frequency error of the UE can be as great as 20 kHz, so the use of the midamble as training sequence is forbidden due to the limitations imposed by the relation (9) on the frequency range. The successive switch towards the longer midamble is made necessary as the closed-loop convergence wouldn't be reached with the sole shorter SYNC. In **fig.14** referred to simulations on TD-SCDMA the precision of the estimation using the SYNC code as training sequence is plotted versus the number *L* of frames used to perform the average. The simulations are carried out using the ITU vehicular channel A at 120 km/h speed, with a signal noise of 0 dB. The initial frequency error $\Delta f$ is set to 20 kHz and two strategies are compared. Indicating *L* as the number of frames used to average the result, it is possible to use the whole set of *L* estimations to calculate the average, as in the closest prior art, but is also possible operates on the basis of a Sign Criterion that will be disclosed soon. The initial region from 20 to 7 kHz is collapsed in the Figure for graphical reasons. The results show that the required precision of 0.1 ppm (200 Hz) is **not** achieved in an open loop configuration even for high *L*. Actually, even performing the average over 200 frames, the RMS (Root Mean Squared) error (standard deviation) results larger than 200 Hz, leading to a probability error rate close to one. The sign criterion clearly leads to better results showing that 10 frames are sufficient to guarantee a residual frequency error well below 2 kHz. Thus after a first frequency correction using the SYNC code as training sequence, the low residual error allows the use of the midamble (whose range is 17 kHz). The accuracy of the algorithm in an open loop configuration, also taking over the SYNC code from the midamble as training sequence, is **not** sufficient to guarantee a final precision of 0.1 ppm. The problem is solved by switching to the closed-loop synchronisation.

The method of the invention avails of three criteria for conditioning the result of the average step F3, namely: the Sign Criterion, a Standard Deviation (STD) criterion, and a Frame Between Applied Corrections (FBACC) criterion.

The three criteria generate four different average modes for the step F3:

- **fig.10** shows a first mode which corresponds to the sign criterion taken alone;

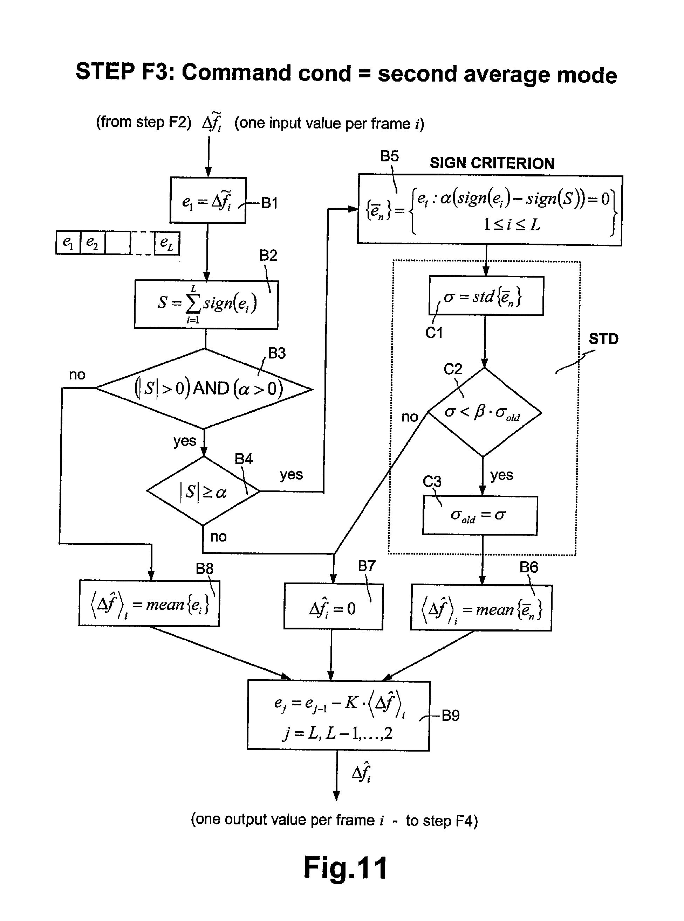

- **fig.11** shows a second mode (first variant) which corresponds to the sign criterion followed by the STD criterion;
- **fig.12** shows a third mode (second variant) which corresponds to the sign criterion followed by the FBACC criterion;

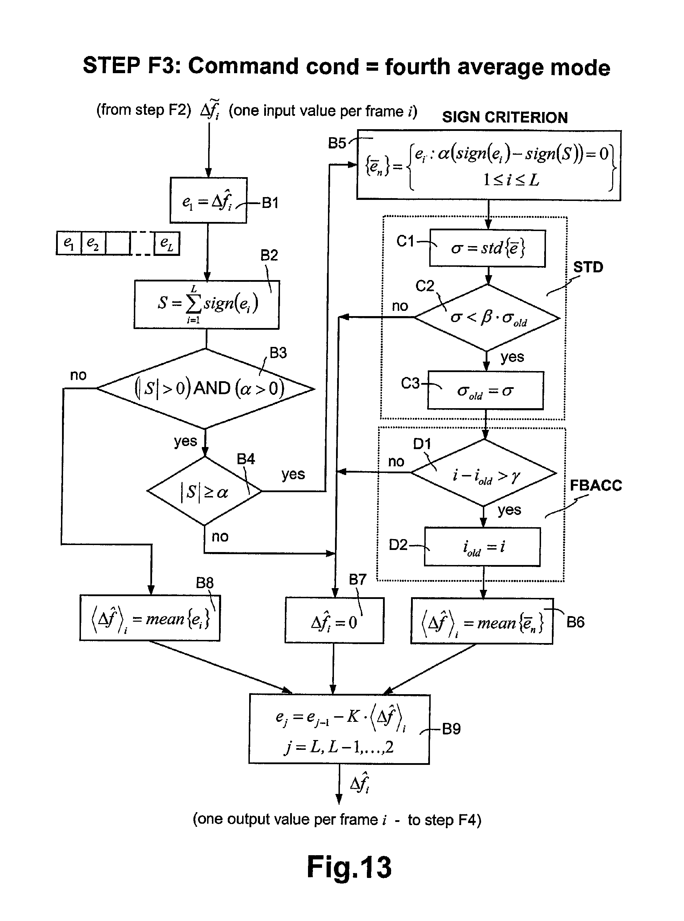

- **fig.13** shows a fourth mode (third variant) which corresponds to the sign criterion, followed by the STD criterion, in its turn followed by the FBACC criterion.

The sign criterion is generally present in all the average modes, it corresponds to a preferred embodiment of the invention, the only exception happens when the criterion is disabled for the causes that will be explained later on. In such a case the various average modes continue to operate downstream the simple average mode of the prior art, and the individual improvements are still obtained. The four average modes shall be further considered in conjunction with the parameters $K$ and $L$ to gain an insight into the invention. Relation (10) shows that if the weighting constant $K$ is close to zero many iterations are needed to reach the asymptotic estimated value, which corresponds to the residual error after a large number of iterations. On the other side the asymptotic standard deviation of the estimated value of the residual frequency offset results:

$$\sigma(\hat{f}) = K\sigma(\hat{\Delta f}) \tag{12}$$

where $\sigma(\hat{\Delta f})$ represents the root of the mean squared error of the frequency estimate expressed in (8), and the estimation is supposed to have null mean error. Thus the parameter $K$ has to be optimised in relation of a compromise between algorithm accuracy and convergence time. The simple average mode of the prior art has the drawback do not reach a satisfactory compromise, while the AVERAGE CONDITIONER block of the invention deploys several average modes to remedy. The more sophisticated recursive approach carried out by the invention guarantees either a small convergence time and a better accuracy respect to the standard approach. The idea that undergoes the new criteria and the relative average modes is that to use a greater value for the constant K, correcting or discarding the wrong frequency correction and thus reducing the root mean squared error of the frequency estimator $\sigma(\Delta f)$. The *sign* and *standard deviation* criteria are introduced to improve the estimator accuracy while the *frame between applied correction* criterion is introduced to balance the frequency of significant, i.e. not null, frequency corrections and their statistic independence. In the successive considerations the following notation is used:

$$sign(x) = \begin{cases} 1 & \text{for } x \geq 0 \\ -1 & \text{for } x < 0 \end{cases} \tag{13}$$

$$mean\{x\} = \frac{\sum\limits_{x_i \in \{x\}} x_i}{|\{x\}|} \tag{14}$$

$$std\{x\} = \sqrt{\frac{\sum\limits_{x_i \in \{x\}} (x_i - mean\{x\})^2}{|\{x\}|}} \tag{15}$$

where $\{x\}$ is a set of values and $|\{x\}|$ is the cardinality of the set, i.e. the number of collected elements. Now the four average modes are discussed.

The Sign criterion corresponding to the first average mode **(Fig.10)** is used in steps A3 and A7 (**Figures 8 and 9**) and in step F3 (**Fig.7**). The other average modes are used in the only closed-loop average step F3 (**Fig.7**). With reference to the **Fig.10** the frequency error $\Delta \tilde{f}$ is received at the input of the L -cell shift register ERROR BUFFER of **fig.6,** which is clocked at frame-time. Both the parameters $K$ and $L$ are supposed known. Once the register is filled up the oldest $\Delta \tilde{f}_L$ is discarded upon the reception of a new $\Delta \tilde{f}_i$ and the remaining content is shifted one position right. The first algorithmic step B1 indicates the acquisition of each new error $e_1 = \Delta \tilde{f}_i$ into the shift register. In the next step B2 the sign function (13), with $x_i = e_i = \Delta \tilde{f}_i$ is summed up for all the $L$ terms $e_i$ contained in the shift register, as in the following:

$$S = \sum_{i=1}^{L} sign(e_i). \qquad (16)$$

in order to obtain a value $S$ having the most recurrent sign among the terms $e_i$ and the absolute value proportional to the number of elements of a sign in excess on the elements of the other sign. For example: if there are 6 elements positive and 4 negative $S = +2$. In the next step B3 the following condition is tested: $[(|S| > 0)$ AND $(\alpha > 0)]$ where $\alpha$ is a parameter opportunely set, preferably lower than $L$. If the condition is true the following further condition $|S| \geq \alpha$ is tested in step B4. If the cascade of the two preceding conditions is true the *sign criterion* is implemented in step B5 in order to obtain a subset $\{\bar{e}_n\}$ having in respect of the original set $\{e_i\}$ a variable dimension equal to the number of terms $e_n$ having the most recurrent sign. The subset $\{\bar{e}_n\}$ is so calculated:

$$\{\bar{e}_n\} = \left\{ \begin{array}{c} e_i : \alpha(sign(e_i) - sign(S)) = 0 \\ 1 \leq i \leq L \end{array} \right\} \; ; \qquad (17)$$

the argument in braces means that the only elements $e_i$ of the original set $\{e_i\}$ whose sign coincides with the majority are introduced in the subset $\{\bar{e}_n\}$, while the other are discarded (not considered). Note that the criterion performs exactly in the same way for

$$\alpha = 1, 2, \ldots, \frac{L}{2} + 1$$

In the next step B6 a new estimate $\langle \overset{\wedge}{\Delta f} \rangle_i$ of the frequency error at the *i-th* iteration is obtained by calculating the mean value on the subset $\{\bar{e}_n\}$ as:

$$\langle \overset{\wedge}{\Delta f} \rangle_i = mean \{\bar{e}_n\} \qquad (18)$$

which is forwarded to the updating step B9. This step is also reached starting from the querying steps B3 or B4 when the answer is "no". Starting from B3 a next step B8 is executed for calculating an estimate $\langle \Delta f \rangle_i$ similar to the (18) but extended to all the $L$ terms of the original set $\{e_i\}$ (this means that the *sign criterion* is not implemented). Starting from B4 a next step B7 is executed to set to zero the correction $\langle \Delta f \rangle_i$. The ultimate step B9 updates the elements $e_i$ of the original set $\{e_i\}$ stored in the ERROR BUFFER in order to take in account a non-null frequency correction. The updating expression is the following:

$$e_j = e_{j-1} - K \cdot \langle \overset{\wedge}{\Delta f} \rangle_i \qquad j = L, L - 1, \ldots, 2 \qquad (19)$$

that synchronises the original content $\{e_i\}$ of the shift register with the actual value of the corrected frequency $f_i$. The estimate $\langle \Delta f \rangle_i$, indicated in Figure as $\Delta f_i$, is forwarded to the step F4 **(fig.7).** The sign criterion taken alone increases the precision and the reliability of the frequency correction.

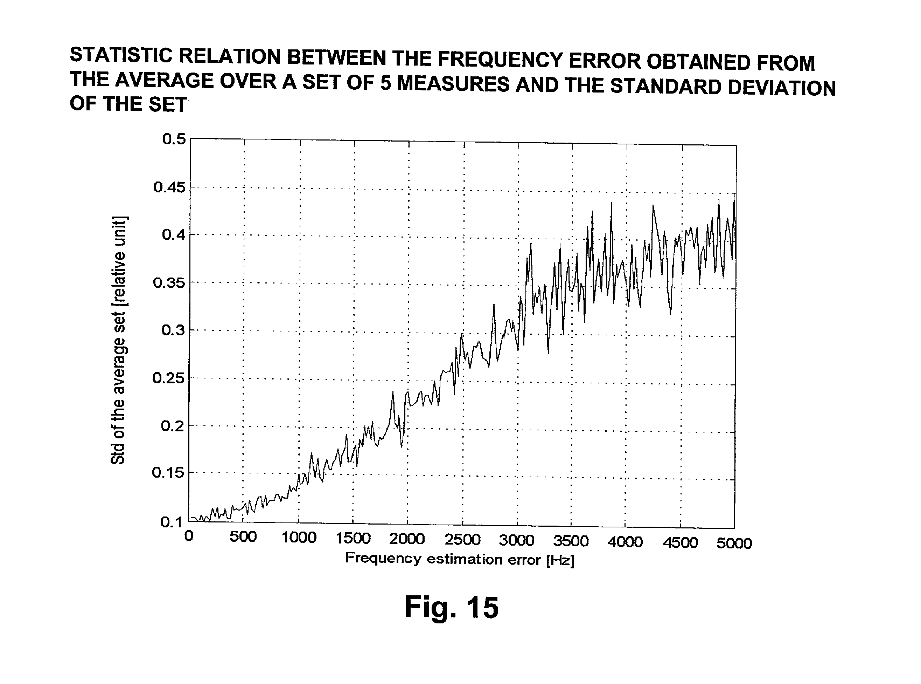

The second average mode represented in **fig.11** differs from the first average mode of **fig.10** for the only insertion of three new steps C1, C2 and C3 between the step B5 and B6. The three steps are included in a dashed block STD charged to perform the Standard Deviation criterion. As known by the statistic error theory, the reliability of a correction obtained from the average over a set of measures is related to the standard deviation of the set. In **fig.15** this basic concept is verified over the average set of 5 measures related to the frequency estimation. Frequency error of the estimation is taken in abscissa while in ordinate the corresponding Standard deviation is reported. It can be verified, at glance, that the larger is the error the larger is the Standard deviation from the average. With reference to the **fig.11** the standard deviation $\sigma$ of the subset $\{\bar{e}_n\}$ is calculated in step C1. Due to the lack of an absolute reference value to be compared with the measured standard deviations, the standard deviation calculated in correspondence of the last not null frequency correction $\sigma_{old}$ is used instead in the next step C2, in which:

$$\sigma < \beta \cdot \sigma_{old} \qquad\qquad (20)$$

is checked for subjecting the corrective effect due to the sign criterion to the standard deviation $\sigma$ of the resulting subset $\{\bar{e}_n\}$, by effect of a constant $\beta \geq 1$. In the expression (20) a positive response is more probable as large as $\beta$ results. Small values of beta (close to one) lead to a tight criteria thus allowing larger values for the parameter $K$. Otherwise larger values of beta need to be associated with smaller value for $K$. If in step C2 the answer of the check is "no" the correction term $\Delta f_i$ is zeroed in step B7, otherwise in step C3 the new $\sigma$ replace $\sigma_{old}$ and step B6 is executed to calculate a new mean error (18).

The third average mode represented in **fig.12** differs from the first average mode of **fig.10** for the only insertion of two new steps D1 and D2 between the step B5 and B6. The two steps are included in a dashed block FBACC charged to perform the criterion called Frame Between Applied Corrections. With reference to the **fig.12** the FBACC criterion is introduced by the following query in step D1:

$$i - i_{old} > \gamma, \qquad 1 \leq \gamma \leq L \qquad\qquad (21)$$

where $\gamma$ is a constant corresponding to a minimum number of frames that have to be received between two non null frequency corrections. Parameter gamma involves the convergence time of the algorithm and the accuracy. If $\gamma = 1$ the corrections are frequent but their statistical independence is low. Note that $\gamma = L$ corresponds to the average over $L$ non-overlapping errors, as in the open-loop estimate of the closest prior art. If in step D1 the answer is "no" the correction term $\Delta f_i$ is zeroed in step B7, otherwise the actual index $i$ replace $i_{old}$ in step D2 and the step B6 is executed to calculate a new mean error (18).

The fourth average mode represented in **fig.13** differs from the second average mode of **fig.11** for the only insertion of the block FBACC downstream the block STD. The flow-chart represented in **fig.13** is the most complete one including the chain of steps C1, C2, C3, D1, D2 in addition to the steps of the basic mode of **fig.11.** The three criteria are contemporarily exploited in **fig.13,** thus the involved parameters are: $L$, $\alpha$, $\beta$, $\gamma$, $K$ that can be optimised taking into account the reciprocal relationship, in particular a joint esteem of $K$ and $\beta$ is required. The optimised five parameters generate the maximal synergistic effect to trade-off precision with fast convergence.

A fifth average mode corresponding to the fourth variant of the invention will be described after having discussed the remaining Figures.

The data aided frequency synchronisation method of the invention, and hence the operation of the UE RECEIVER of **fig.6**, has been tested by computer simulations. The propagation conditions considered in the simulations, according to the CHANNEL MODEL block dashed in **fig.6,** are:

- noise = $n(t)$;
- path loss plus multipath with Doppler Effect = $c(t)$.

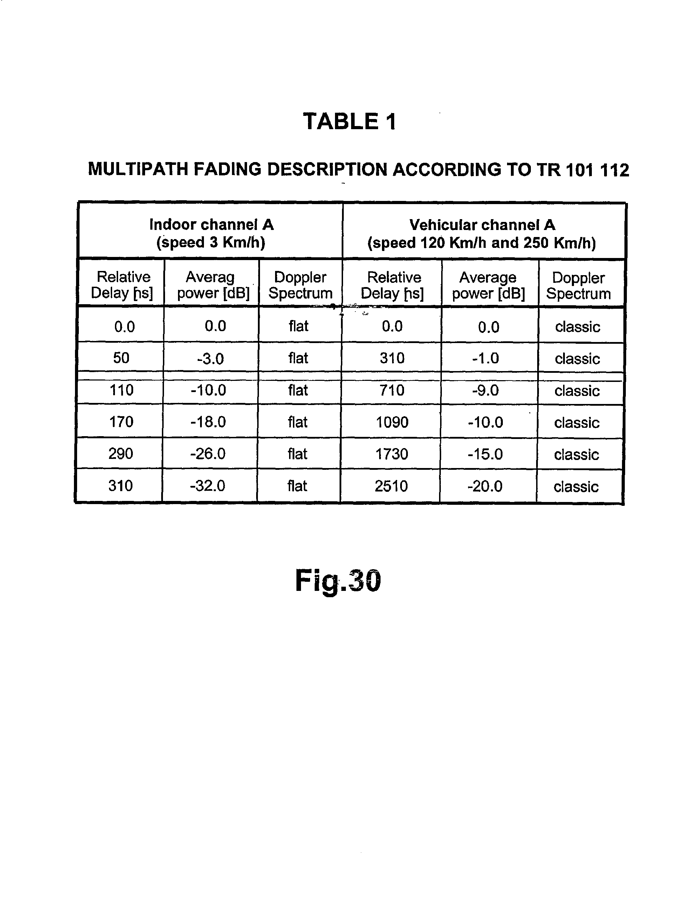

The simulation chain is completely developed in base band. The RF parameters are included in the channel block which simulates the multipath and Doppler effect with a discrete Wide Sense Stationary Uncorrelated Scattering (WSSUS) model. In this model the received signal is represented by the sum of the delayed replicas of the input signal weighted by an independent zero-mean complex Gaussian time variant process. The multipath fading environments considered and the relative values used in the simulations are reported in **TABLE 1 (fig.30)** according to TR 101 112. TD-SCDMA frames of **fig.1C** are transmitted. Timeslot TS0 always includes the BCH channel with fictitious data symbols and a permitted midamble. According to the standard, symbols of the midamble are taken in the set {+1, -1, +j, -j} while SYNC and data symbols are 4-PSK. The pulse shaping is a root-raised-cosine filter with 0.22 roll-off factor and 4 samples per transmitted chip. Thus in the preliminary frame synchronisation (not part of the present invention and obtained before) the frame misalignment error can be set either to: ½ chip (worst case), ¼ chip, or 0 chip (best case). In all the simulations the worst case is considered, so an error of ½ chip is introduced. The noise is an Additive White Gaussian Noise (AWGN) with a power that change according to the desired SNR at the output of the RX filters in the UE. The AWGN is added after the channel block. The frequency offset $\exp(j2\pi\Delta f k T_c)$ is applied after the RX filters and the down-sampling. In the closed loop configuration the frequency correction, which simulate the calibration of the local oscillator, has been applied multiplying the signal, after down-conversion, by the term

$$\exp\left(j2\pi\Delta\hat{f}kT_c\right)$$

. Post processing for the presentation of the results is performed making use of Matlab ® software tool.

The preliminary open-loop estimation is completed before simulating the closed-loop estimate, so that the only midamble is used starting with a reduced set of $\Delta f$. The following combination of parameters, already used for obtaining the results depicted in the **Figures 4 and 5,** seems to be an optimal compromise:

| $K$ = 0.1 | $L$ = 5 | $\alpha$ = 1 | $\gamma$ = 3 | $\beta$ = 10 |
|---|---|---|---|---|
| Channel model: vehicular A, | | $C/I$ = -3 dB, | UE speed = 120 km/h | |

The particular combination of the five parameters has been firstly deduced by heuristic considerations and then optimised by simulations, considering other configurations of parameters and different RF scenarios. The underlined combination of parameters is named "Optimised parameters" while the RF scenario is named "Common RF scenario" because the only one considered in the Figures, but not in the simulations. The analysis over the parameter $\alpha$ has been simulated and the conclusions (for brevity) are indicated without the support of the Figures. The results confirms the intuition that larger values for $\alpha$ are related with a greater convergence time, due to the more severe restriction of the *Sign Criterion* involving a smaller number of accepted frequency corrections. In any way the best performances are obtained for $\alpha$ = 1.

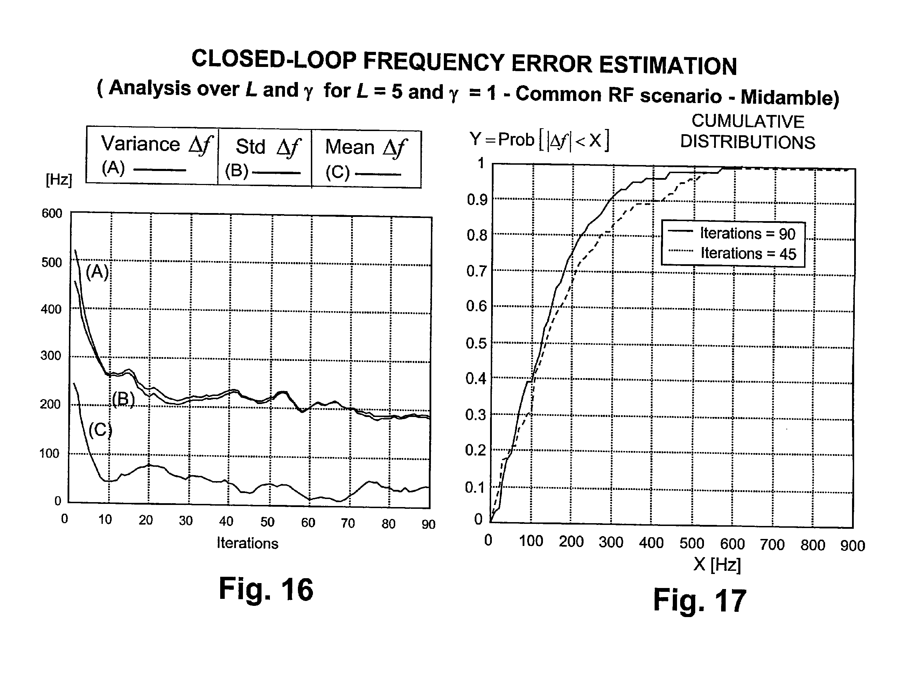

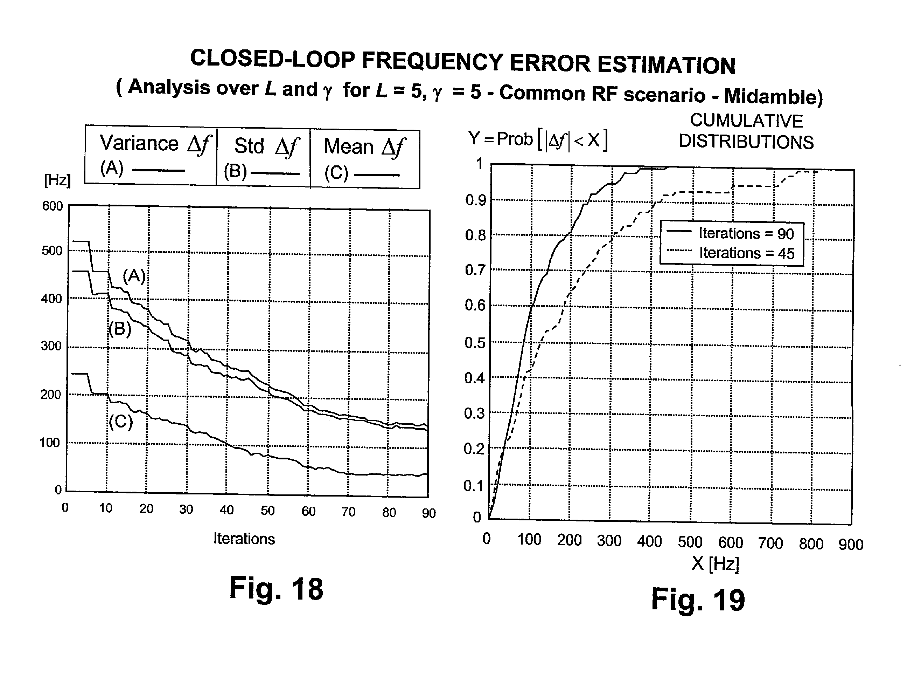

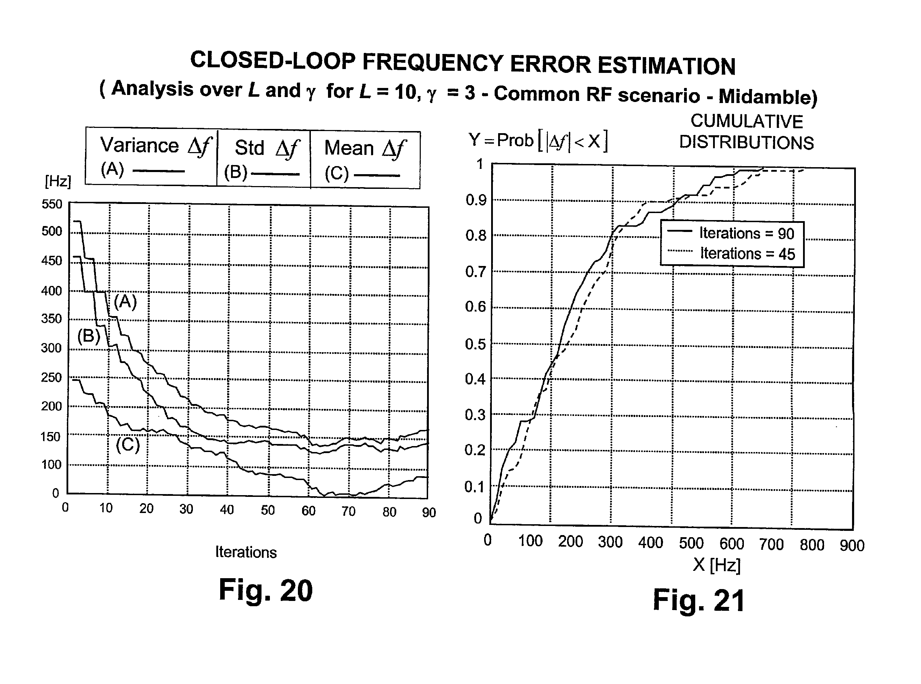

**Figures 16 to 21** show the simulation results of the analysis over the parameters $L$ and $\gamma$, maintaining the optimised values for the others. Each of the **Figures 16, 18, 20** shows three superimposed curves of Mean (14), Standard deviation (15), and Variance of the considered $\Delta f$ set as a function of the iteration number of the closed-lop estimation, while each of the **Figures 17, 19, 21** shows the cumulative distributions of the error $\Delta f$ for 45 and 90 iterations. The correctness of the optimised length $L$ of the memory buffer for the errors $e_i$ and the distance $\gamma$ (expressed in frames) between two non-null frequency corrections are both verified. The comparison between **fig.4** and **20** and **fig.5** and **21** shows that the algorithm performances (precision and speed of convergence) are not improved increasing the memory size over the optimised value of $L$ = 5. Relation between $\gamma$ and the convergence time of the estimate is confirmed comparing **fig.17** with **19** which show that larger values for $\gamma$ slow down the convergence. On the contrary reduced values of $\gamma$ speed up the convergence but worsen the final accuracy, as proved comparing *fig.16* with *18.* The choice of optimised values $L$ = 5 and $\gamma$ = 3 represent a good compromise between accuracy and convergence time.

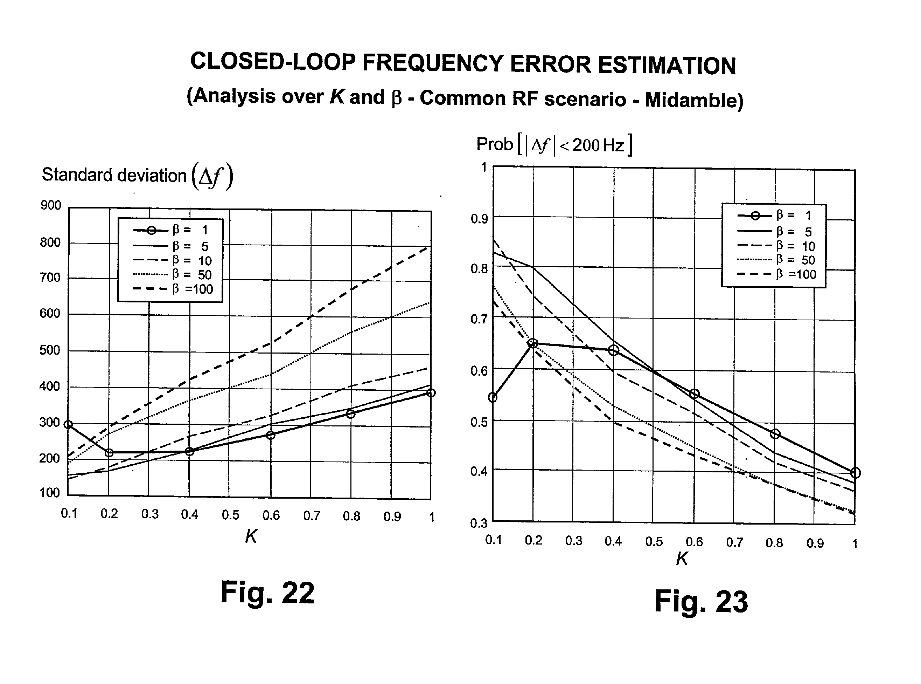

**Figures 22 and 23** show the simulation results of the analysis over the parameters $K$ and $\beta$, maintaining the optimised values for the others. **Fig.22** shows five curves associated to as many values of the parameter $\beta$ characterising the *standard deviation criterion.* The considered values for $\beta$ are: 1, 5, 10, 50, and 100. Each curve represents the Standard deviation of the considered $\Delta f$ set as a function of the *recursive gain factor K.* **Fig.23** shows five curves associated to the preceding values of $\beta$ and representing the probability that $|\Delta f|$ error be lower than 0.1 ppm. For the sake of simplicity the only Common RF scenario is presented in the Figure, although more complete simulations have been performed using four different set of parameters for the channel model to prove that the optimisation process is independent by the choice of the propagation environment. A common behaviour can be deduced from the overall simulations and in particular from the presented graphs, namely: the worse performances result for small $\beta$ at low value of $K$, and for large $\beta$ at high values of $K$. Therefore the heuristic relation between the *Standard Deviation Criterion* and $K$ is proved. The performance obtained for $\beta$ = 5 or 10 are better than those obtained for $\beta$ = 100 (which implies a weaker criteria than a lower $\beta$), proving that the *Standard Deviation Criteria* really involves a performance improvement. However the best results are obtained for low values of $K$ showing that this criterion alone is not sufficient to completely avoid wrong frequency corrections. The results show that the optimised values $K$ = 0.1 and $\beta$ = 5, or 10, are the optimum choice.

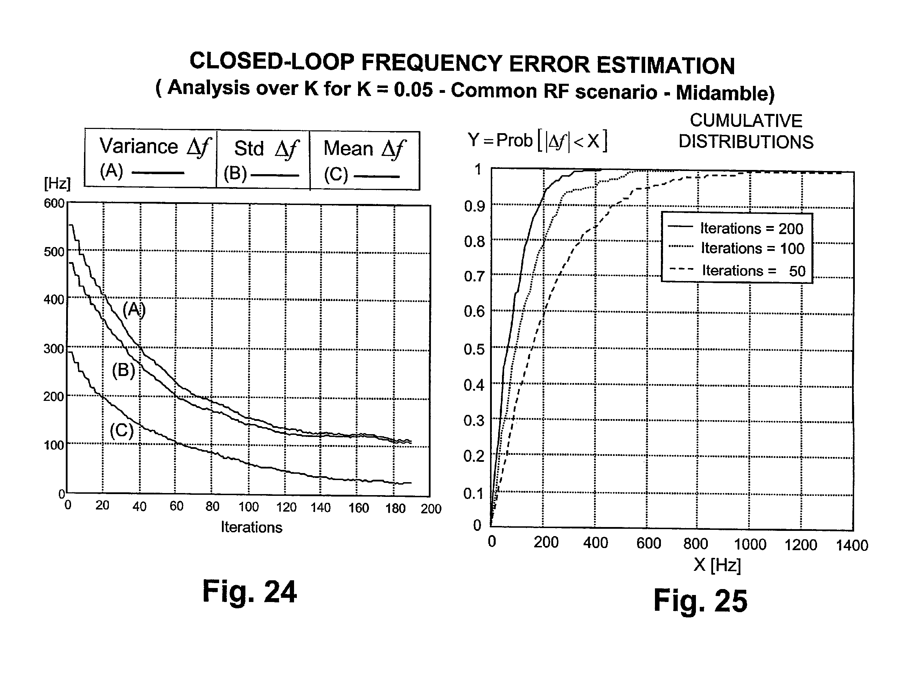

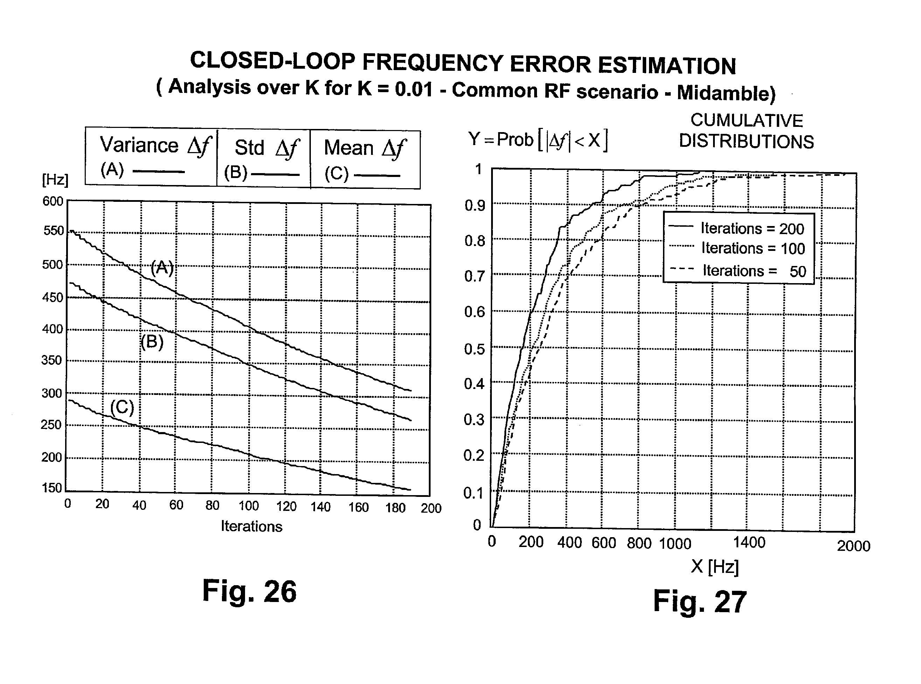

**Figures 24 to 27** show the simulation results of the analysis over the parameter $K$, maintaining the optimised values for the others. The kind of graphs is the same as the preceding analysis over $L$ and $\gamma$. Two values for $K$ are considered in the Figures: $K$ = 0.01 and $K$ = 0.05, the preceding **Figures 4 and 5** obtained with the same conditions show additional curves for $K$ = 0.1. The parameter optimisation developed up till now suggests that the best performances are related to low values of $K$, in that the aim of this analysis is to verify among low values of $K$ the implications on the convergence time. **Fig.4** shows that no significant performance difference results from iteration 100 and 200 for $K$ = 0.1; thus the asymptotic accuracy is well achieved after 100 iterations. On the contrary, graphs of **Figures 24 and 25**, for K = 0.05, show that a noteworthy performance improvement results from 100 and 200 iterations. In particular the Standard deviation graph of **Fig.24** shows that the asymptotic accuracy is almost achieved after 200 iterations. **Figures 26 and 27**, for K = 0.01, show the worst performances for both the precision and the speed of convergence. In particular graphs of **Fig.27** denote the high time needed to reach convergence, moreover the standard deviation graph of **Fig.26** shows that the asymptotic accuracy is far to be achieved after 200 iterations. Thus the choice of $K$ should be related to the restrictions on the procedure time length. As example for 100 iterations (i.e. 500 ms) the best choice is $K = 0.1$ while at 200 iteration the best results are related to $K = 0.05$. The problem to save time at the UE switch on, considering that the initial cell search is quite long in TD-SCDMA, suggests to limit the calibration time of the UE's reference clock to less than 1 second, in that $K = 0.1$ is preferred.

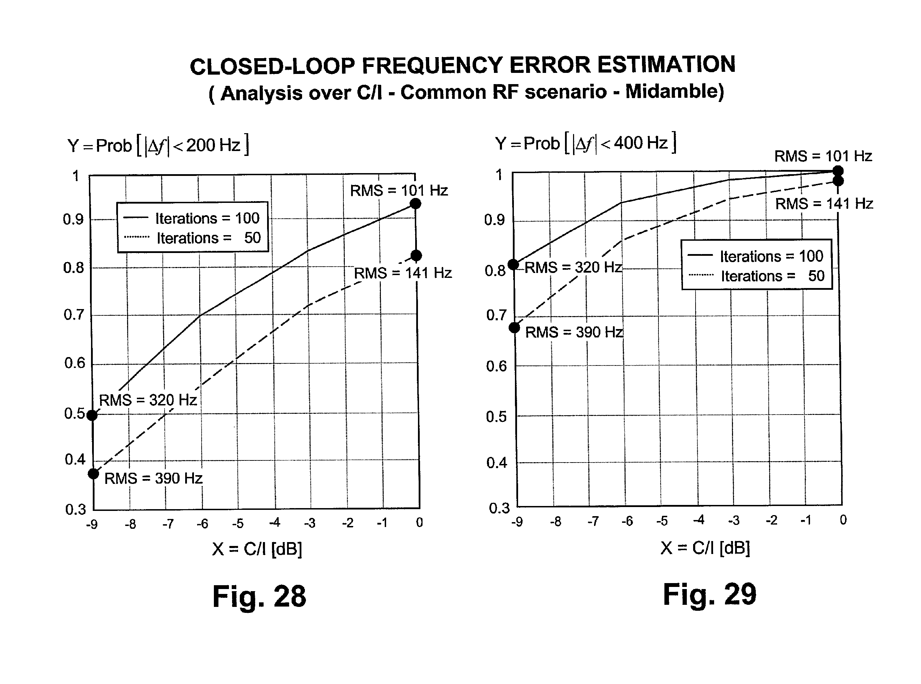

The investigations on the performances of the frequency synchronisation method of the invention will be completed for the optimised parameters in case of a maximum number of 100 iterations. Both the vehicular and indoor channel have been tested to clarify the relation between the probability of a residual error greater than 200 Hz (0.1 ppm) or 400 Hz (0.2 ppm) and the signal noise ratio (C/I). Three propagation scenarios are considered: indoor and vehicular at 120 and 180 km/h. The results show very similar performance in the considered three propagation scenario. The performance difference between the case of 120 and 180 km/h in the vehicular environment is very small proving the algorithm reliability also at high UE speed. The RMS (Root Mean Squared) frequency error is not affected by the Doppler frequency shift $f_{doppler}$ due to the mobile set speed. Moreover in the vehicular 180 Km/h environment at C/I = 0 dB the RMS results smaller than the maximum $f_{doppler} = v/\lambda \cong 330 Hz$. For brevity, the only vehicular at 120 km/h is considered in the **Figures 28 and 29. Fig.28** shows that at low signal noise ratios the probability of a residual frequency error greater than 200 Hz is relevant; it can be argued that more iterations are needed to achieve the desired accuracy under these hypotheses. In this case a lower value of $K$ should be chosen in order to achieve a lower probability error, but too low values of $K$ are not optimal.

The fourth variant of the method recurs to a *dynamic parameter configuration* approach particularly profitable in noisy channels. In accordance with the fourth variant an initial set of parameters with a high value for $K$ $(K \approx 0.1)$ is used in an initial group of iterations, in favour of fast convergence, than a lower value for $K$ is chosen $(K \approx 0.05, 0.01)$ in order to achieve the final required accuracy.

In conclusion it can be appreciated that the frequency synchronisation method of the invention, due to the high grade of sophistication introduced in the closed-loop, offers in respect of the simpler recursive algorithm of the closest prior art a lot of additional tools which cooperate to achieve superior performances.

### Claims

1. In a cellular system a method performable by a mobile station to synchronise the reference frequency of its local oscillator (TCXO) to the frequency $f$ of the carrier transmitted by a target base station, the method recursively correcting said reference frequency by executing at each iteration $i$ the steps of:

   - calculating a function of the autocorrelation over a subset of base band samples of a training sequence (Training Sequence, SCH, Midamble) transmitted at time interval $i$ in order to obtain a sub-optimal value $\Delta \tilde{f}_i$ of the frequency error;
   - storing the calculated value $\Delta \tilde{f}_i$ into a sequential memory $L$-position long (ERROR BUFFER) and performing an average of the stored values to be used as an estimate $\Delta \hat{f}_i$ of the true frequency error between said reference frequency and the frequency $f$ of the carrier;
   - summing up the preceding value $f_{i-1}$ of said reference frequency to a correction term $K \cdot \Delta \hat{f}_i$, in order to obtain a corrected value $f_i$ of said reference frequency, being K a weighting constant comprised between 0 and 1;

   **characterised in that::**

   - the average is performed on the only terms having the most recurrent algebraic sign among the stored terms $\Delta \tilde{f}_i$
   - the content of said sequential memory (ERROR BUFFER) is corrected after each non-null correction of said reference frequency by subtracting the actual correction term $K \cdot \Delta \hat{f}_i$ to all the stored terms $\Delta \tilde{f}_i$

2. Method for synchronising the reference frequency in accordance with claim 1, **characterised in that** said reference frequency is corrected at the value $f_i$ only if the number of terms $\Delta \tilde{f}_i$ having equal algebraic sign is greater than a constant $\alpha$ lower than $L$.

3. Method for synchronising the reference frequency in accordance with claim 1 or 2, **characterised in that** includes an additional step for calculating the standard deviation $\sigma$ of the averaged terms $\Delta \tilde{f}_i$, in order to correct said reference frequency at the value $f_i$ only if $\sigma < \beta \cdot \sigma_{old}$ results, being $\sigma_{old}$ the standard deviation calculated in correspondence of the last non-null frequency correction, and $\beta$ a constant $\geq 1$.

**4.** Method for synchronising the reference frequency in accordance with one of the preceding claims, **characterised in that** said reference frequency is corrected at the value $f_i$ only after a minimum number $\gamma$ of iterations between two non-null frequency corrections are spent, being $\gamma$ a constant comprised between 1 and *L.*

**5.** Method for synchronising the reference frequency in accordance with one of the preceding claims, **characterised in that** said iterations are subdivided in two groups and an initial group of iterations is executed with a higher value for the weighting constant K than the value assigned for executing the iterations of the second group, achieving fast convergence first and the required accuracy then.

**6.** Method for synchronising the reference frequency in accordance with one of the preceding claims when it depends on claim 2, **characterised in that** if the constant $\alpha = 0$ the average is performed on all the stored terms $\Delta \tilde{f}_i$ .

**7.** Method for synchronising the reference frequency in accordance with one of preceding claims, **characterised in that** at each iteration *i* the estimated frequency error $\Delta f_i$ is compared with the required accuracy and the recursive correction of said reference frequency is stopped when the accuracy is reached.

**8.** Method for synchronising the reference frequency in accordance with one of the preceding claims, **characterised in that** said function of the autocorrelation has the following mathematical expression derived by a sub-optimal maximum likelihood estimation $\Delta \tilde{f}$ of the true frequency error $\Delta f$ :

$$\Delta \tilde{f} \cong \frac{1}{\pi T_c (M+1)} arg\left\{ \sum_{k=1}^{M} R(k) \right\} \; ,$$

in which $R(k)$ is said autocorrelation function,

$$M \equiv {N}\!/\!{2}$$

is the dimension of the calculation subset, $N$ is the length of the training sequence $(y_k)$ used for $R(k)$, and $T_c$ is the duration of a sample.

**9.** Method for synchronising the reference frequency in accordance with one of the preceding claims, **characterised in that** said recursive correction of the reference frequency is preceded by a non-recursive correction performed only once by the mobile station after an initial accuracy is reached, the non-recursive correction including the steps of:

• calculating a function of the autocorrelation over a subset of base band samples of a training sequence (Training Sequence, SCH, Midamble) transmitted at time interval *i* in order to obtain a sub-optimal value $\Delta \tilde{f}_i$ of the frequency error;

• storing the calculated value $\Delta \tilde{f}_i$ into a sequential memory L-position long (ERROR BUFFER) and performing an average on the only terms having the most recurrent algebraic sign among the stored terms $\Delta \tilde{f}_i$ to be used as a provisional estimate $\Delta f_i$ of the true frequency error between said reference frequency and the frequency $f$ of the carrier;

• comparing the provisional estimate $\Delta \hat{f}_i$ with the initial accuracy and repeating the preceding steps for successive time intervals until the required accuracy is reached, and when it happens:

• summing up the initial value of said reference frequency to the unique correction term $K \cdot \Delta \hat{f}_i$, in order to obtain a provisional corrected value $f_i$ of said reference frequency to be forwarded to the recursive correction, being $K$ a weighting constant comprised between 0 and 1;

• correcting the content of said sequential memory by subtracting the actual correction term $K \cdot \Delta \hat{f}_i$ to all the stored terms $\Delta \tilde{f}_i$ before entering the recursive correction.

**10.** Method for synchronising the reference frequency in accordance with one of the preceding claims except the preceding one, **characterised in that** said recursive correction of the reference frequency is preceded by a non-recursive correction performed only once by the mobile station after an initial accuracy is reached, the non-recursive correction including the steps of:

- selecting as a training sequence a first sequence (SYNC) most suitable to operate with maximal permitted offset of the reference frequency ;
- calculating a function of the the autocorrelation over a subset of base band samples of the selected training sequence (SYNC) transmitted at time interval $i$ in order to obtain a sub-optimal value $\Delta \tilde{f}_i$ of the frequency error;
- storing the calculated value $\Delta \tilde{f}_i$ into a sequential memory $L$-position long (ERROR BUFFER) and performing an average on the only terms having the most recurrent algebraic sign among the stored terms $\Delta \tilde{f}_i$ to be used as a provisional estimate $\Delta f_i$ of the true frequency error between said reference frequency and the frequency $f$ of the carrier;
- comparing the provisional estimate $\Delta \hat{f}_i$ with the initial accuracy and repeating the preceding steps for successive time intervals until the required accuracy is reached, and when it happens:

- summing up the initial value of said reference frequency to the unique correction term $K \cdot \Delta \hat{f}_i$, in order to obtain a provisional corrected value $f_i$ of said reference frequency to be forwarded to the recursive correction, being $K$ a weighting constant comprised between 0 and 1;
- correcting the content of said sequential memory by subtracting the actual correction term $K \cdot \Delta \hat{f}_i$ to all the stored terms $\Delta f_i$;
- replacing the previously selected training sequence with a longer one (Midamble) before entering the recursive correction.

11. Method for synchronising the reference frequency in accordance with the preceding claim when it depends on claim 4, **characterised in that** said cellular system is like the one described in the 3GPP standard referred as CDMA-TDD at low chip rate, and the following combination of parameters is selected:

| $K = 0.1;$ | $L = 5;$ | $\alpha = 1;$ | $\gamma = 3;$ | $\beta = 10.$ |
|---|---|---|---|---|

12. A Mobile station including the following means for synchronising the reference frequency of its local oscillator (TCXO) to the frequency $f$ of the carrier transmitted by a target base station:

- first processing means (ALIGNER & MODULATION CANCELLER, ERROR ESTIMATOR) for calculating a function of the autocorrelation over a subset of base band samples of a training sequence (Training Sequence, SCH, Midamble) transmitted at time interval $i$ in order to obtain a sub-optimal value $\Delta f_i$ of the frequency error;
- a sequential memory $L$-position long (ERROR BUFFER) for storing the calculated value $\Delta \tilde{f}_i$ :

- second processing means (AVERAGE CONDITIONER) for calculating an average of the stored values $\Delta \tilde{f}_i$ to be used as an estimate $\Delta f_i$ of the true frequency error between said reference frequency and the frequency $f$ of the carrier;
- frequency correction means (FREQUENCY CORRECTOR) for summing up the preceding value $f_{i-1}$ of said reference frequency to a correction term $K \cdot \Delta \hat{f}_i$, in order to obtain a corrected value $f_i$ of said reference frequency, being $K$ a weighting constant comprised between 0 and 1;

**characterised in that::**

- said second processing means (AVERAGE CONDITIONER) is commanded (cond) to perform the average on the only terms having the most recurrent algebraic sign among the terms $\Delta \tilde{f}_i$ stored in the sequential memory (ERROR BUFFER);
- said sequential memory (ERROR BUFFER) is commanded (upd) after each non-null correction of said reference frequency to correct its content by subtracting the actual correction term $K \cdot \Delta \hat{f}_i$ to all the stored terms $\Delta \tilde{f}_i$ .

13. A Mobile station in accordance with claim 12, **characterised in that** said second processing means (AVERAGE CONDITIONER) is commanded (cond) to generate a null correction term until the number of terms $\Delta \tilde{f}_i$ having equal algebraic sign is greater than a constant $\alpha$ lower than $L$.

14. A Mobile station in accordance with claim 12 or 13, **characterised in that** said second processing means (AVERAGE CONDITIONER) is commanded (cond) to calculate the standard deviation $\sigma$ of the averaged terms $\Delta \tilde{f}_i$ and generate a null correction term until $\sigma < \beta \cdot \sigma_{old}$ results, being $\sigma_{old}$ the standard deviation calculated in correspondence of the last non-null frequency correction, and $\beta$ a constant $\geq 1$.

15. A Mobile station in accordance with any claim from 12 to 14, **characterised in that** said second processing means (AVERAGE CONDITIONER) is commanded (cond) to generate a null correction term until a minimum number $\gamma$ of iterations between two non-null frequency corrections are spent, being $\gamma$ a constant comprised between 1 and L.

16. A Mobile station in accordance with any claim from 12 to 14, **characterised in that** further includes training sequence switching means (COM) commanded (sel) to select either a first (SYNC) or a second (MID) training sequence to the input of said first processing means (ALIGNER & MODULATION CANCELLER, ERROR ESTIMATOR).

## GSM (or DCS) BASIC FRAME AND NORMAL BURST (KNOWN ART)

1 GSM BASIC FRAME (4.615 ms)

| TS0 | TS1 | TS2 | TS3 | TS4 | TS5 | TS6 | TS7 |
|-----|-----|-----|-----|-----|-----|-----|-----|

TB = Tail Bits

GP = Guard Period

1 time slot (0.577ms) = 156.25 bit durations (3.69 μs)

| TB 3 | Encrypted bits 58 | Training Sequence 26 | Encrypted bits 58 | TB 3 | GP 8,25 |
|------|-------------------|----------------------|-------------------|------|---------|

**Fig. 1A**

## UTRA-FDD (W-CDMA): RADIO FRAME STRUCTURE OF THE SYNCHRONIZATION CHANNEL SCH        (KNOWN ART)

10 ms = 38400 chips

| TS0 | TS1 | TS2 | TS3 | TS4 | TS5 | TS6 | TS7 | TS8 | TS9 | TS10 | TS11 | TS12 | TS13 | TS14 |
|-----|-----|-----|-----|-----|-----|-----|-----|-----|-----|------|------|------|------|------|

SCH {

} Primary SCH

256 chips

} Secondary SCH

2560 chips

**Fig. 1B**

EP 1 347 611 A1

# FRAME TD-SCDMA (1.28 Mcps)    (KNOWN ART)

FRAME #i | FRAME #i+1

— 10 ms —

SUBFRAME 0 | SUBFRAME 1

Data symbols

C16
C1

96  96  160

DwPTS | GP | UpPTS

— 5 ms = 6400 chips —

| TS0 864 | TS1 864 | TS2 864 | TS3 864 | TS4 864 | TS5 864 | TS6 864 |

1 chip = 0.78125 μs

DwPTS

Data symbols (352 chips) | Midamble (144 chips) | Data symbols (352 chips) | GP (16 chips)

GP (32 chips) | SYNC (64 chips)

**Fig. 1C**

EP 1 347 611 A1

# CLOSED-LOOP FREQUENCY ERROR ESTIMATION
## ( Simple average, Common RF scenario, Midamble)

| Variance $\Delta f$ | Std $\Delta f$ | Mean $\Delta f$ |
|---|---|---|
| (A) ——— | (B) ——— | (C) ——— |

**Fig. 2** (KNOWN ART)

$Y = \text{Prob}\left[|\Delta f| < X\right]$

CUMULATIVE DISTRIBUTIONS

Iterations = 200
Iterations = 100
Iterations = 50

X [Hz]

**Fig. 3** (KNOWN ART)

EP 1 347 611 A1

# CLOSED-LOOP FREQUENCY ERROR ESTIMATION
## ( Optimised parameters, Common RF scenario, Midamble)

| Variance $\Delta f$ | Std $\Delta f$ | Mean $\Delta f$ |
|---|---|---|
| (A) —— | (B) —— | (C) —— |

**Fig. 4**

$Y = \mathrm{Prob}\left[|\Delta f| < X\right]$

CUMULATIVE DISTRIBUTIONS

— Iterations = 200
-- Iterations = 100
···· Iterations = 50

**Fig. 5**

EP 1 347 611 A1

# SIMPLIFIED UE RECEIVER WITH OUTLINED BLOKS FOR OPEN/CLOSED-LOOP FREQUENCY SYNCHRONISATION

**Fig. 6**

EP 1 347 611 A1

# CLOSED-LOOP FREQUENCY SYNCHRONISATION METHOD

Preliminary steps
- Frequency scan for the Initial cell search.
- Training sequence detection for time slot synchronisation, target cell selection, and channel estimate.

$f$ · Training sequence · $\Delta T$

$r(t)$ →

**Down conversion - A/D - Buffering - RRC Filtering - Signal $r_k$ alignment - Phase modulation cancellation** — F1

$\hat{f}_i$

F5

Frequency error correction

$\Delta \hat{f}_i$

$y_i$

Calculate expression (8) — F2

$\Delta \widetilde{f}_i$

cond →

**Select the average mode and execute** — F3

$\Delta \hat{f}_i$

no

$\left| \Delta \hat{f}_i \neq 0 \right| < 0.1\,\mathrm{ppm}$

F4

yes

STOP

$r_k$ →

(to Data Detection)

## Fig.7

EP 1 347 611 A1

# FREQUENCY SYNCHRONISATION METHOD: OPEN-LOOP PRECEDES CLOSED-LOOP

Preliminary steps

• Frequency scan for the Initial cell search.
• Training sequence detection for time slot synchronisation, target cell selection, and channel estimate.

Open-loop frequency offset estimation

$f$ 

Training sequence 

$\Delta T$

$r(t)$ → Down conversion - A/D - Buffering - RRC Filtering

Signal $r_k$ alignment - Phase modulation cancellation

A1

$y_i$

$r_k$

A2 — Calculate expression (8)

(to Data Detection)

$\Delta \tilde{f}_i$

A3

cond → Average $\Delta \tilde{f}_i$ - Normal or improved averaging mode

$\Delta \hat{f}_i$

yes

$i \leq NNframes$

A4

no

$\Delta \hat{f}_i$

A5 — Frequency error correction

Update the L-position sequential buffer of the error $e_i$

$(e_1, ..., e_L)$ $\hat{f}_i$

A6 — Switch to closed-loop synchronisation

A7

cond → **CLOSED-LOOP SYNCHRONISATION (steps F1 to F5)**

## Fig.8

STOP

# FREQUENCY SYNCHRONISATION METHOD IN TD-SCDMA UMTS SYSTEM

Preliminary steps

- Frequency scan for the Initial cell search.
- Training sequence detection for time slot synchronisation, target cell selection, and channel estimate.

**Open-loop frequency offset estimation**

$f$ — Training sequence — $\Delta T$

$r(t)$ →

**SELECT SYNC**

Down conversion - A/D - Buffering - RRC Filtering

Signal $r_k$ alignment - Phase modulation cancellation

A1

$y_i$ — $r_k$

A2 — Calculate expression (8) — (to Data Detection)

A3

$\Delta\tilde{f_i}$

cond → Average $\Delta\tilde{f_i}$ - Normal or improved averaging mode

$\Delta\hat{f_i}$

yes

$i \leq NNframes$

A4

no

$\Delta\hat{f_i}$

A5 — Frequency error correction

Update the L-position sequential buffer of the error $e_i$

$(e_1,...,e_L) \downarrow \hat{f_i}$

A6 — **SELECT MIDAMBLE** - Switch to closed-loop synchronisation

A7

cond → **CLOSED-LOOP SYNCHRONISATION** (steps F1 to F5)

STOP

# Fig.9

## STEP F3: Command cond = first average mode

(from step F2) $\Delta \widetilde{f}_i$ (one input value per frame $i$)

**Fig.10**

(one output value per frame $i$ - to step F4)

## STEP F3: Command cond = second average mode

(from step F2) $\Delta \tilde{f}_i$ (one input value per frame $i$)

$e_1 = \Delta \tilde{f}_i$ —B1

| $e_1$ | $e_2$ | | $e_L$ |

$$S = \sum_{i=1}^{L} sign(e_i)$$  B2

$\left(|S| > 0\right) AND \left(\alpha > 0\right)$  B3

no

yes

$|S| \geq \alpha$  B4

yes

no

**B5**  **SIGN CRITERION**

$$\{\bar{e}_n\} = \left\{ \begin{array}{c} e_i : \alpha\left(sign(e_i) - sign(S)\right) = 0 \\ 1 \leq i \leq L \end{array} \right\}$$

$\sigma = std\{\bar{e}_n\}$  C1

**STD**

$\sigma < \beta \cdot \sigma_{old}$  C2

no

yes

$\sigma_{old} = \sigma$  C3

$\left\langle \Delta \hat{f} \right\rangle_i = mean\{e_i\}$  B8

$\Delta \hat{f}_i = 0$  B7

$\left\langle \Delta \hat{f} \right\rangle_i = mean\{\bar{e}_n\}$  B6

$$e_j = e_{j-1} - K \cdot \left\langle \Delta \hat{f} \right\rangle_i$$
$$j = L, L-1, \ldots, 2$$  B9

$\Delta \hat{f}_i$

(one output value per frame $i$ - to step F4)

## Fig.11

# STEP F3: Command cond = third average mode

(from step F2) $\Delta \widetilde{f}_i$ (one input value per frame $i$)

B1 $e_1 = \Delta \widetilde{f}_i$

$\boxed{e_1}\ \boxed{e_2}\ \boxed{\phantom{}}\ \cdots\ \boxed{e_L}$

B2 $S = \sum_{i=1}^{L} sign(e_i)$

B3 $(|S| > 0)\ AND\ (\alpha > 0)$ — no

yes

B4 $|S| \geq \alpha$ — yes

no

B5 SIGN CRITERION
$$\{\overline{e}_n\} = \left\{ \begin{array}{c} e_i : \alpha(sign(e_i) - sign(S)) = 0 \\ 1 \leq i \leq L \end{array} \right\}$$

FBACC

D1 $i - i_{old} > \gamma$ — no

yes

D2 $i_{old} = i$

B8 $\left\langle \Delta \hat{f} \right\rangle_i = mean\{e_i\}$

B7 $\Delta \hat{f}_i = 0$

B6 $\left\langle \Delta \hat{f} \right\rangle_i = mean\{\overline{e}_n\}$

B9
$$e_j = e_{j-1} - K \cdot \left\langle \Delta \hat{f} \right\rangle_i$$
$$j = L, L-1, \ldots, 2$$

$\Delta \hat{f}_i$

(one output value per frame $i$ - to step F4)

# Fig.12

## STEP F3: Command cond = fourth average mode

(from step F2) $\Delta \widetilde{f_i}$ (one input value per frame $i$)

**SIGN CRITERION**

B5 $\quad \{\overline{e}_n\} = \left\{ \begin{array}{c} e_i : \alpha\left(sign(e_i) - sign(S)\right) = 0 \\ 1 \leq i \leq L \end{array} \right\}$

$e_1 = \Delta \hat{f_i}$ —B1

| $e_1$ | $e_2$ | | $e_L$ |

B2

$S = \sum_{i=1}^{L} sign(e_i)$

B3

no $\quad \left(|S| > 0\right) \text{ AND } (\alpha > 0)$

yes

B4 $\quad$ yes

$|S| \geq \alpha$

no

C1 $\quad \sigma = std\{\overline{e}\}$

**STD**

C2

no $\quad \sigma < \beta \cdot \sigma_{old}$

yes

C3 $\quad \sigma_{old} = \sigma$

D1

no $\quad i - i_{old} > \gamma$

**FBACC**

yes

D2 $\quad i_{old} = i$

B8 $\quad \left\langle \Delta \hat{f} \right\rangle_i = mean\{e_i\}$

B7 $\quad \Delta \hat{f_i} = 0$

$\left\langle \Delta \hat{f} \right\rangle_i = mean\{\overline{e}_n\}$ B6

$e_j = e_{j-1} - K \cdot \left\langle \Delta \hat{f} \right\rangle_i$

$j = L, L-1,\ldots,2$ —B9

$\Delta \hat{f_i}$

(one output value per frame $i$ - to step F4)

## Fig.13

## TD-SCDMA - STANDARD DEVIATION OF THE RESIDUAL FREQUENCY ERROR USING THE SYNC CODE AS TRAINING SEQUENCE IN OPEN-LOOP ESTIMATION

## Fig. 14

STATISTIC RELATION BETWEEN THE FREQUENCY ERROR OBTAINED FROM
THE AVERAGE OVER A SET OF 5 MEASURES AND THE STANDARD DEVIATION
OF THE SET

Fig. 15

# CLOSED-LOOP FREQUENCY ERROR ESTIMATION

## ( Analysis over *L* and γ for *L* = 5 and γ = 1 - Common RF scenario - Midamble)

| Variance $\Delta f$ | Std $\Delta f$ | Mean $\Delta f$ |
|---|---|---|
| (A) —— | (B) —— | (C) —— |

[Hz]

**Fig. 16**

$Y = \text{Prob}\left[\,|\Delta f| < X\,\right]$

CUMULATIVE
DISTRIBUTIONS

Iterations = 90
Iterations = 45

X [Hz]

**Fig. 17**

EP 1 347 611 A1

# CLOSED-LOOP FREQUENCY ERROR ESTIMATION

## ( Analysis over $L$ and $\gamma$ for $L = 5$, $\gamma = 5$ - Common RF scenario - Midamble)

Fig. 18

Fig. 19

EP 1 347 611 A1

# CLOSED-LOOP FREQUENCY ERROR ESTIMATION
## ( Analysis over $L$ and $\gamma$ for $L$ = 10, $\gamma$ = 3 - Common RF scenario - Midamble)

| Variance $\Delta f$ | Std $\Delta f$ | Mean $\Delta f$ |
|---|---|---|
| (A) ——— | (B) ——— | (C) ——— |

Iterations

## Fig. 20

$Y = \text{Prob}\left[|\Delta f| < X\right]$

### CUMULATIVE DISTRIBUTIONS

— Iterations = 90
······ Iterations = 45

X [Hz]

## Fig. 21

EP 1 347 611 A1

# CLOSED-LOOP FREQUENCY ERROR ESTIMATION

## (Analysis over $K$ and $\beta$ - Common RF scenario - Midamble)

Standard deviation $\left(\Delta f\right)$

Legend:
- $\beta = 1$
- $\beta = 5$
- $\beta = 10$
- $\beta = 50$
- $\beta = 100$

**Fig. 22**

$\text{Prob}\left[\,|\Delta f|<200\,\text{Hz}\,\right]$

Legend:
- $\beta = 1$
- $\beta = 5$
- $\beta = 10$
- $\beta = 50$
- $\beta = 100$

**Fig. 23**

EP 1 347 611 A1

# CLOSED-LOOP FREQUENCY ERROR ESTIMATION
## ( Analysis over K for K = 0.05 - Common RF scenario - Midamble)

| Variance $\Delta f$ | Std $\Delta f$ | Mean $\Delta f$ |
|---|---|---|
| (A) ——— | (B) ——— | (C) ——— |

**Fig. 24**

$Y = \text{Prob}\left[|\Delta f| < X\right]$

CUMULATIVE DISTRIBUTIONS

Iterations = 200
Iterations = 100
Iterations = 50

**Fig. 25**

EP 1 347 611 A1

# CLOSED-LOOP FREQUENCY ERROR ESTIMATION
## ( Analysis over K for K = 0.01 - Common RF scenario - Midamble)

**Fig. 26**

**Fig. 27**

EP 1 347 611 A1

# CLOSED-LOOP FREQUENCY ERROR ESTIMATION
## ( Analysis over C/I - Common RF scenario - Midamble)

$Y = \text{Prob}\left[|\Delta f| < 200\,\text{Hz}\right]$

**Fig. 28**

$Y = \text{Prob}\left[|\Delta f| < 400\,\text{Hz}\right]$

**Fig. 29**

EP 1 347 611 A1

# TABLE 1

## MULTIPATH FADING DESCRIPTION ACCORDING TO TR 101 112

| Indoor channel A (speed 3 Km/h) | | | Vehicular channel A (speed 120 Km/h and 250 Km/h) | | |
|---|---|---|---|---|---|
| Relative Delay [ηs] | Averag power [dB] | Doppler Spectrum | Relative Delay [ηs] | Average power [dB] | Doppler Spectrum |
| 0.0 | 0.0 | flat | 0.0 | 0.0 | classic |
| 50 | -3.0 | flat | 310 | -1.0 | classic |
| 110 | -10.0 | flat | 710 | -9.0 | classic |
| 170 | -18.0 | flat | 1090 | -10.0 | classic |
| 290 | -26.0 | flat | 1730 | -15.0 | classic |
| 310 | -32.0 | flat | 2510 | -20.0 | classic |

# Fig.30

**European Patent Office**

## EUROPEAN SEARCH REPORT

Application Number

EP 02 42 5173

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | LUISE M ET AL: "CARRIER FREQUENCY RECOVERY IN ALL-DIGITAL MODEMS FOR BURST-MODE TRANSMISSIONS" IEEE TRANSACTIONS ON COMMUNICATIONS, IEEE INC. NEW YORK, US, vol. 43, no. 2/4, PART 2, 1 February 1995 (1995-02-01), pages 1169-1178, XP000502606 ISSN: 0090-6778 * the whole document * | 1-16 | H04L27/233 H04L27/00 |
| A | EP 0 856 962 A (MITSUBISHI ELECTRIC CORP) 5 August 1998 (1998-08-05) * abstract * * claims 1-3 * * figure 1 * | 1-16 | |

TECHNICAL FIELDS
SEARCHED (Int.Cl.7)

H04L

The present search report has been drawn up for all claims

| Place of search | Date of completion of the search | Examiner |
|---|---|---|
| THE HAGUE | 12 September 2002 | Reilly, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 42 5173

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2002

| Patent document cited in search report | Publication date | Patent family member(s) | Publication date |
|---|---|---|---|
| EP 0856962 A | 05-08-1998 | JP 10215234 A<br>EP 0856962 A2<br>US 6341123 B1 | 11-08-1998<br>05-08-1998<br>22-01-2002 |

EPO FORM P0459

For more details about this annex : see Official Journal of the European Patent Office, No. 12/82